# FASCICULE DE BREVET EUROPEEN

(11) **EP 2 633 683 B1**
(45) Date de publication et mention de la délivrance du brevet: **26.02.2020**
(21) Numéro de dépôt: 11787738.1
(22) Date de dépôt: 26.10.2011
(51) Int. Cl.: H04N 7/24, H04N 21/436, H04N 21/24, H04N 21/442, H04N 21/258, H04N 21/241, H04N 21/2662

(54) **EXÉCUTION DÉPORTÉE D'UNE APPLICATION LOGICIELLE AU SEIN D'UN RÉSEAU**
FERNAUSFÜHRUNG EINER SOFTWAREANWENDUNG IN EINEM NETZWERK
REMOTELY SITED EXECUTION OF A SOFTWARE APPLICATION WITHIN A NETWORK

(30) Priorité: 27.10.2010 FR 1058865
(43) Date de publication de la demande: 04.09.2013
(73) Titulaire: Orange, 75015 Paris (FR)
(72) Inventeur: PIEGAY, Romain, F-75005 Paris (FR); AGRO, Roberto, F-92340 Bourg La Reine (FR)
(74) Mandataire: Vidon Brevets & Stratégie
(86) Numéro de dépôt international: PCT/FR2011/052499
(87) Numéro de publication internationale: WO 2012/056170

(56) Documents cités:
- EP-A1- 1 845 683
- US-A1- 2006 188 096
- JONGWOO SUNG ET AL: "UPnP Based Intelligent Multimedia Service Architecture for Digital Home Network", SOFTWARE TECHNOLOGIES FOR FUTURE EMBEDDED AND UBIQUITOUS SYSTEMS, 2006 AND THE 2006 SECOND INTERNATIONAL WORKSHOP ON COLLABORATIVE COMPUTING , INTEGRATION, AND ASSURANCE. SEUS 2006/WCCIA 2006. THE FOURTH IEEE WO RKSHOP ON GYEONGJU, KOREA 27-28 APRIL, 27 avril 2006 (2006-04-27), pages 157-162, XP010912478, DOI: DOI:10.1109/SEUS-WCCIA.2006.46 ISBN: 978-0-7695-2560-0
- HYUNJU LEE ET AL: "The u-MUSE System: An Integrated UPnP AV Home Entertainment System supporting RUI Service and Device Mobility", HYBRID INFORMATION TECHNOLOGY, 2006. ICHIT '06, IEEE, PISCATAWAY, NJ, USA, 9 novembre 2006 (2006-11-09), pages 712-717, XP031260295, ISBN: 978-0-7695-2674-4
- HYUNYONG LEE ET AL: "An Approach for Content Sharing among UPnP Devices in Different Home Networks", IEEE TRANSACTIONS ON CONSUMER ELECTRONICS, IEEE SERVICE CENTER, NEW YORK, NY, US, vol. 53, no. 4, 1 November 2007 (2007-11-01), pages 1419-1426, XP011199912, ISSN: 0098-3063, DOI: 10.1109/TCE.2007.4429232

## Description

### 1. Domaine de l'invention

Le domaine de l'invention est celui de la gestion des applications logicielles interactives.

Plus précisément, l'invention s'applique à la distribution et à l'exécution d'applications logicielles interactives sur différents dispositifs UPnP d'un réseau UPnP.

L'invention peut notamment mettre en œuvre le protocole UPnP (de l'anglais « *Universal Plug and Play* ») qui permet de simplifier la mise en œuvre de réseaux locaux et permet à des périphériques de se connecter aisément pour partager des contenus : images, contenus audio, contenus vidéo.

### 2. Art antérieur

Le standard UPNP / DLNA s'impose comme un standard pour le partage, la diffusion et le contrôle des contenus multimédias numériques.

Plus précisément, le standard UPnP est un protocole qui permet de relier simplement plusieurs ordinateurs et autres équipements informatiques entre eux, qui sont alors dénommés dispositifs UPnP. Ce standard est promulgué par l'UPnP Forum (http://www.upnp.org/). L'envoi de commandes UPnP, permettant de faire communiquer les dispositifs UPnP entre eux (ces commandes sont appelées « *actions UPnP* ») et d'exercer un contrôle sur certains dispositifs UPnP du réseau, est notamment basé sur les protocoles TCP/IP, UDP et HTTP. Des messages SSDP *(« Simple Service Discovery Protocol »)* permettent de découvrir des équipements et les services disponibles sur un réseau et fonctionnent quelque soit le système d'exploitation du dispositif UPnP.

Le standard UPnP permet ainsi un partage aisé des contenus numériques tels que des photographies, des films ou de la musique au sein d'un réseau.

Cependant les inventeurs ont constaté qu'il n'existe pas de mécanisme simple et comparable, permettant d'exécuter des applications logicielles au moyen de différents dispositifs UPnP d'un réseau UPnP. En effet, pour pouvoir exécuter des applications logicielles, il est nécessaire d'une part de mettre en place de lourdes infrastructures en dehors du réseau UPnP, et d'autre part de disposer d'une bande passante conséquente afin de maintenir une réactivité optimale et d'éviter toute latence rédhibitoire pour les utilisateurs.

Le document "UPnP Based Intelligent Multimedia Service Architecture for Digital Home Network", JONGWOO SUNG ET AL, SOFTWARE TECHNOLOGIES FOR FUTURE EMBEDDED AND UBIQUITOUS SYSTEMS, 2006 AND THE 2006 SECOND INTERNATIONAL WORKSHOP ON COLLABORATIVE COMPUTING , INTEGRATION, AND ASSURANCE. SEUS 2006/WCCIA 2006. THE FOURTH IEEE WO RKSHOP ON GYEONGJU, KOREA 27-28 APRIL, 27 avril 2006 (2006-04-27), pages 157-162, DOI: DOI:10.1109/SEUS-WCCIA.2006.46ISBN: 978-0-7695-2560-0 décrit un cadre de service multimédia intelligent qui permet aux contenus audiovisuels d'être adoptés et partagés en fonction des environnements multimédias des utilisateurs.

Le document "The u-MUSE System: An Integrated UPnP AV Home Entertainment System supporting RUI Service and Device Mobility", HYUNJU LEE ET AL, HYBRID INFORMATION TECHNOLOGY, 2006. ICHIT '06, IEEE, PISCATAWAY, NJ, USA, 9 novembre 2006 (2006-11-09), pages 712-717, ISBN: 978-0-7695-2674-4 décrit un système de divertissement AV domestique UPnP intégré jouant le rôle de centre de contrôle pour divers périphériques AV hétérogènes dans un réseau domestique via un contrôleur intégré.

Le document "An Approach for Content Sharing among UPnP Devices in Différent Home Networks", HYUNYONG LEE ET AL, IEEE TRANSACTIONS ON CONSUMER ELECTRONICS, IEEE SERVICE CENTER, NEW YORK, NY, US, vol. 53, no. 4, 1 novembre 2007 (2007-11-01), pages 1419-1426, ISSN: 0098-3063, DOI: 10.1109/TCE.2007.4429232 décrit une approche pour le partage de contenu entre les périphériques UPnP de différents réseaux domestiques.

### 3. Exposé de l'invention

L'invention vient améliorer la situation.

Selon un premier aspect, l'invention concerne un procédé de contrôle d'une exécution d'une application logicielle, caractérisé en ce qu'il est mis en oeuvre au sein d'une architecture comprenant un serveur de contenus (DMS), au moins un dispositif de restitution (DMR) de contenus multimédia, et un dispositif de contrôle (DMC) conçu pour le pilotage dudit au moins dispositif de restitution (DMR) de contenus multimédia, ledit procédé de contrôle étant mis en oeuvre par ledit dispositif de contrôle (DMC) et comprenant :
- une étape d'obtention auprès dudit serveur de contenus (DMS), de données d'indexation de ladite application logicielle indexée en tant que contenu multimédia au sein dudit serveur de contenus (DMS), lesdites données d'indexation comprenant une première adresse de localisation de contenu, à utiliser par un dispositif d'exécution (APPRUNTIME) pour obtenir un module logiciel conçu pour une exécution de ladite application logicielle,
- une étape de transmission, audit dispositif d'exécution, d'une instruction d'initialisation de ladite application logicielle comprenant la première adresse de localisation de contenu,
- une étape d'obtention, auprès dudit dispositif d'exécution, configuré pour déclencher une exécution de ladite application logicielle, de premières données de connexion à utiliser par un dispositif de restitution pour établir une première liaison de communication à travers un réseau avec le dispositif d'exécution et pour recevoir, pendant ladite exécution, via ladite première liaison de communication un flux multimédia résultant de ladite exécution,
- une étape de transmission audit dispositif de restitution de paramètres de restitution d'un contenu multimédia comprenant lesdites premières données de connexion,
- une étape d'envoi audit dispositif de restitution d'une commande de restitution dudit contenu multimédia, destinée à déclencher une restitution par ledit dispositif de restitution dudit flux multimédia.

Corrélativement l'invention concerne un dispositif de contrôle, conçu pour le pilotage d'au moins un dispositif de restitution de contenus multimédia et comprenant:
- des moyens d'obtention, auprès d'un serveur de contenus, de données d'indexation d'une application logicielle indexée en tant que contenu multimédia au sein dudit serveur de contenus, lesdites données d'indexation comprenant une première adresse de localisation de contenu, à utiliser par un dispositif d'exécution pour obtenir un module logiciel conçu pour une exécution de ladite application logicielle,
- des moyens de transmission, audit dispositif d'exécution, d'une instruction d'initialisation de ladite application logicielle comprenant la première adresse de localisation de contenu,
- des moyens d'obtention, auprès dudit dispositif d'exécution configuré pour déclencher une exécution d'une application logicielle, de premières données de connexion à utiliser par un dispositif de restitution pour établir une première liaison de communication à travers un réseau avec le dispositif d'exécution et pour recevoir, pendant ladite exécution, via ladite première liaison de communication, un flux multimédia résultant de ladite exécution,
- des moyens de transmission audit dispositif de restitution de paramètres de restitution d'un contenu multimédia comprenant lesdites premières données de connexion,
- des moyens d'envoi audit dispositif de restitution d'une commande de restitution dudit contenu multimédia, destinée à déclencher une restitution par ledit dispositif de restitution dudit flux multimédia.

Selon l'invention le dispositif de contrôle joue le rôle d'intermédiaire entre le dispositif d'exécution, servant à exécuter l'application logicielle, et le dispositif de restitution, servant à restituer un flux multimédia résultant de l'exécution de cette application logicielle. Le dispositif de contrôle obtient notamment les données de connexion nécessaires à l'établissement d'une liaison de communication à travers un réseau entre le dispositif d'exécution et le dispositif de restitution.

Cette mise en communication permet la mise en œuvre d'un service d'exécution déportée d'application logicielle au moyen d'entités existantes que sont les dispositifs de restitution de contenus multimédia et les dispositifs de contrôle conçus pour le pilotage de tels dispositifs de restitution. On parle d'exécution déportée en ce que la liaison de communication est établie à travers un réseau.

Cette liaison en communication à la transmission du flux à restituer, en l'occurrence, d'un flux multimédia résultant de l'exécution de l'application logicielle. La réception et la restitution du flux multimédia ont lieu pendant cette exécution.

Le dispositif de contrôle et le dispositif de restitution sont par exemple mis en œuvre sous forme de dispositif UPnP: on enrichit ainsi les fonctionnalités de ces dispositifs UPnP pour fournir le service d'exécution d'application logicielle. En outre, l'invention conserve les mécanismes prévus dans le standard UPnP pour le dialogue entre un dispositif de contrôle et un dispositif de restitution: un envoi de paramètres de restitution suivi d'un envoi de commande de restitution. L'invention est donc aisément intégrable dans les dispositifs UPnP existant.

Selon un mode de réalisation, le procédé de contrôle comprend en outre une étape d'obtention auprès d'un serveur de contenus de données d'indexation dudit contenu multimédia comprenant une première adresse de localisation de contenu, à utiliser par le dispositif d'exécution pour obtenir un module logiciel conçu pour une exécution de ladite application logicielle, les premières données de connexion étant sous forme d'une deuxième adresse de localisation de contenu.

Le dispositif d'exécution est en effet conçu pour, d'une part, obtenir le module logiciel désigné par la première adresse de localisation et déclencher l'exécution de l'application logicielle au moyen de ce module logiciel, et, d'autre part, générer le flux multimédia résultant de cette exécution afin de rendre ce flux multimédia accessible à partir de la deuxième adresse de localisation.

Grâce à l'utilisation d'une adresse de localisation, désignant et localisant l'application logicielle à exécuter, le dispositif d'exécution devient paramétrable : il est susceptible d'exécuter différentes applications logicielles.

Grâce à l'utilisation d'une adresse de localisation à partir de laquelle le flux multimédia peut être obtenu, il est possible de gérer plusieurs connexions : le dispositif d'exécution est utilisable pour la transmission simultanée de plusieurs flux multimédia résultant de l'exécution simultanée de plusieurs applications logicielles.

La restitution, pendant ladite exécution, d'un flux multimédia résultant de l'exécution d'une application logicielle nécessite de gérer (identifier, localiser, traiter) deux types de contenu: d'une part un contenu sous forme de module logiciel conçu pour une exécution de ladite application logicielle et d'autre part un contenu constitué par le flux multimédia résultant de cette exécution. Cette gestion est assurée par le dispositif d'exécution, qui reçoit une information sur le premier type de contenu et fournit en échange une information sur le deuxième type de contenu.

Il s'opère ainsi une redirection entre le serveur de contenus et le dispositif de restitution: la restitution s'opère, non pas au moyen d'une liaison établie vers un serveur de contenu local ou distant, comme c'est le cas dans le standard UPnP, mais vers un dispositif d'exécution d'application logicielle qui génère le flux à restituer.

Le dispositif d'exécution est pilotable et paramétrable: c'est le dispositif de contrôle qui désigne et localise au moyen de cette adresse de localisation l'application logicielle à exécuter. En outre, le choix de l'application logicielle à exécuter peut être fait par un utilisateur du dispositif de contrôle.

Selon un mode de réalisation, le procédé de contrôle comprend en outre au sein dudit dispositif de contrôle :
- une étape de réception, en provenance dudit dispositif d'exécution, de deuxièmes données de connexion à utiliser par un dispositif de restitution pour établir une deuxième liaison de communication à travers un réseau avec le dispositif d'exécution et transmettre via ladite deuxième liaison de communication d'au moins une commande à exécuter par ladite application logicielle et représentative d'au moins une action effectuée par un utilisateur au moyen d'un périphérique du dispositif de restitution;
- une étape de modification de données d'indexation de ladite application logicielle en y intégrant lesdites deuxièmes données de connexion;
- une étape de transmission à un dispositif de restitution des données d'indexation modifiées.

Le dispositif de restitution, servant à la restitution du flux multimédia, contrôle à distance l'exécution de l'application par l'envoi de ces commandes. En particulier, un utilisateur de ce dispositif de restitution peut visualiser / écouter le contenu vidéo / audio de ce flux sur le dispositif de restitution et en même temps émettre des commandes à destination de l'application logicielle. On aboutit ainsi à un mécanisme d'exécution déportée, compatible avec les mécanismes de gestion et de restitution de contenus définis dans le standard UPnP.

Selon un mode de réalisation, le procédé de contrôle comprend en outre une étape de sélection, parmi une pluralité de dispositifs d'exécution, d'un dispositif d'exécution apte à exécuter ladite application logicielle, en fonction d'une configuration nécessaire à l'exécution de ladite application logicielle.

Ceci permet de s'assurer que le dispositif d'exécution sera en mesure d'exécuter une application logicielle donnée.

Selon un mode de réalisation du procédé de contrôle, lorsque le dispositif de contrôle est mis en œuvre sous forme de dispositif UPnP et que le dispositif d'exécution est mis en œuvre au sein d'un dispositif UPnP sous forme de service d'exécution d'applications, le procédé de contrôle comprend une étape de mise en œuvre d'un protocole de découverte dudit dispositif UPnP et dudit service d'exécution d'applications.

Une mise en œuvre sous forme de service UPnP permet aux dispositifs UPnP du réseau de détecter la présence du service et de dialoguer avec le dispositif d'exécution au moyen des mécanismes prévus dans le standard UPnP. La mise en relation est grandement facilitée et standardisée: elle devient utilisable pour tout dispositif de restitution UPnP et tout dispositif de contrôle UPnP présentant les évolutions fonctionnelles nécessaires à la gestion de contenus sous forme d'application logicielle.

Enfin, l'intégration dans un dispositif de contrôle UPnP de fonction de présentation de contenus sous forme d'application simplifie la vie de l'utilisateur qui utile un seul et même logiciel pour gérer ses contenus audio et/ou vidéo, texte et applications logicielles.

Selon un deuxième aspect, l'invention concerne un procédé d'exécution d'une application logicielle caractérisé en ce qu'il comprend, au sein d'un dispositif d'exécution :
- une étape de réception, en provenance d'un dispositif de contrôle conçu pour le pilotage d'au moins un dispositif de restitution de contenus multimédia, d'une instruction d'initialisation de ladite application logicielle, comprenant une première adresse de localisation de contenu pour obtenir un module logiciel conçu pour une exécution de ladite application logicielle,
- une étape de déclenchement d'une exécution de ladite application logicielle par ledit module logiciel,
- une étape de transmission, audit dispositif de contrôle, de premières données de connexion à utiliser par un dispositif de restitution pour établir une première liaison de communication à travers un réseau avec le dispositif d'exécution et recevoir pendant ladite exécution un flux multimédia résultant de ladite exécution,- une étape d'établissement de ladite première liaison de communication avec ledit dispositif de restitution ;
- une étape de transmission audit dispositif de restitution, via ladite première liaison de communication, dudit flux multimédia.

Selon un mode de réalisation, le procédé d'exécution comprend en outre:
- une étape de transmission, audit dispositif de contrôle, de deuxièmes données de connexion utilisables pour établir une deuxième liaison de communication à travers un réseau avec le dispositif d'exécution,
- une étape d'établissement de ladite deuxième liaison de communication avec ledit dispositif de restitution;
- une étape de réception via ladite deuxième liaison d'au moins une commande à exécuter par ladite application logicielle et représentative d'au moins une action effectuée par un utilisateur au moyen d'un périphérique du dispositif de restitution;
- une étape de transmission de ladite commande à ladite application logicielle en cours d'exécution.

Selon un mode de réalisation du procédé de contrôle, lorsque le dispositif de contrôle est mis en œuvre sous forme de dispositif UPnP et que le dispositif d'exécution est mis en œuvre au sein d'un dispositif UPnP sous forme de service d'exécution d'applications, le procédé d'exécution comprend en outre une étape de mise en œuvre d'un protocole de découverte dudit dispositif UPnP et dudit service d'exécution d'applications.

Selon un mode de réalisation, le procédé d'exécution comprend en outre, préalablement à ladite étape de déclenchement, une étape de création d'une session applicative au cours de laquelle ladite étape de déclenchement sera exécutée, lesdites premières données de connexion comprenant un identifiant de ladite session applicative et une adresse dudit dispositif d'exécution.

Corrélativement l'invention concerne un dispositif d'exécution d'une application logicielle caractérisé en ce qu'il comprend:
- des moyens de réception, en provenance d'un dispositif de contrôle conçu pour le pilotage d'au moins un dispositif de restitution de contenus multimédia, d'une instruction d'initialisation de ladite application logicielle, comprenant une première adresse de localisation de contenu pour obtenir un module logiciel conçu pour une exécution de ladite application logicielle,
- des moyens de déclenchement d'une exécution de ladite application logicielle par ledit module logiciel,
- des moyens de transmission, audit dispositif de contrôle, de premières données de connexion à utiliser par un dispositif de restitution pour établir une première liaison de communication à travers un réseau avec le dispositif d'exécution et recevoir pendant ladite exécution un flux multimédia à restituer, résultant de ladite exécution,
- des moyens d'établissement de ladite première liaison de communication avec ledit dispositif de restitution;- des moyens de transmission audit dispositif de restitution, via ladite première liaison de communication, dudit flux multimédia.

Les avantages énoncés pour le dispositif de contrôle, respectivement pour le procédé de contrôle, sont transposables directement au dispositif d'exécution, respectivement pour le procédé d'exécution, qui vient d'être présenté.

Selon un troisième aspect, l'invention concerne un dispositif de restitution de contenus multimédia, apte à communiquer avec un dispositif d'exécution configuré pour déclencher une exécution d'une application logicielle, le dispositif de restitution comprenant:
- des moyens d'obtention, en provenance d'un dispositif de contrôle conçu pour le pilotage dudit dispositif de restitution de contenus multimédia, de paramètres de restitution d'un contenu multimédia, lesdits paramètres de restitution comprenant des premières données de connexion à utiliser pour établir une première liaison de communication à travers un réseau avec ledit dispositif d'exécution,
- des moyens d'établissement de ladite première liaison de communication avec le dispositif d'exécution et des moyens de réception, pendant ladite exécution, via ladite première liaison de communication, d'un flux multimédia résultant de ladite exécution,
- des moyens de réception d'une commande de restitution dudit contenu multimédia, déclenchant une restitution par ledit dispositif de restitution dudit flux multimédia,
- des moyens de restitution dudit flux multimédia.

Selon un mode de réalisation, le dispositif de restitution comprend
- des moyens d'obtention de données d'indexation dudit contenu multimédia, lesdites données d'indexation comprenant des deuxièmes données de connexion à utiliser pour établir une deuxième liaison de communication à travers un réseau avec ledit dispositif d'exécution,
- des moyens d'établissement de ladite deuxième liaison de communication avec le dispositif d'exécution,
- des moyens de transmission via ladite deuxième liaison de communication d'au moins une commande à exécuter par ladite application logicielle et représentative d'au moins une action effectuée par un utilisateur au moyen d'un périphérique du dispositif de restitution.

Les avantages énoncés pour le dispositif de contrôle, respectivement pour le procédé de contrôle, sont transposables directement au dispositif de restitution, respectivement pour le procédé de restitution, qui vient d'être présenté.

L'invention concerne également un programme d'ordinateur comportant des instructions pour la mise en œuvre d'un procédé de contrôle ou d'un procédé d'exécution tel que présenté préalablement, lorsque ce programme est exécuté par un processeur.

L'invention vise aussi un support d'informations lisible par un processeur de données, et comportant des instructions d'un programme d'ordinateur tel que mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de représentation de l'architecture *UPnP AV* ;
- la figure 1B illustre un exemple de représentation de l'architecture *UPnP AV* adapté à l'exécution déportée d'application logicielle ;
- la figure 2 présente les principales phases du procédé d'exécution d'une application logicielle selon un mode de réalisation ;
- la figure 2B présente en détail les étapes du procédé d'exécution d'une application logicielle selon un mode de réalisation ;
- la figure 3 illustre un exemple de structure simplifiée d'un serveur de contenus multimédias ;
- la figure 4 illustre un exemple de structure simplifiée d'un dispositif de contrôle d'exécution d'une application logicielle ;
- la figure 5 illustre un exemple de structure simplifiée d'un dispositif de restitution d'un flux audio / vidéo résultant de l'exécution d'une application logicielle ;
- la figure 6 illustre un exemple de structure simplifiée d'un dispositif d'exécution d'une application logicielle.

### 5. Description d'un mode de réalisation

### 5.1 Principe général

La sélection d'un dispositif d'exécution qui exécute une application logicielle, elle-même sélectionnée par un utilisateur, est réalisée en fonction d'une configuration nécessaire à l'exécution de cette application logicielle et permet la prise en compte des capacités d'exécution du dispositif d'exécution.

L'exécution de l'application logicielle est réalisée sur le dispositif d'exécution tandis que la restitution d'un flux multimédia résultant de cette exécution est effectuée sur un dispositif de restitution connecté à travers un réseau au dispositif d'exécution. Ces deux dispositifs (exécution/restitution) sont agencés, selon l'invention, pour pouvoir établir une première liaison de communication pour l'envoi au dispositif de restitution d'un flux multimédia à restituer et une deuxième liaison de communication pour l'envoi de commandes à exécuter par l'application logicielle.

L'invention est susceptible d'être mise en œuvre au moyen de dispositifs UPnP notamment:
- un serveur de contenus multimédia (DMS) qui réalise une indexation, en tant que contenus multimédias, de contenus de type applications logicielles,
- un point de contrôle ou dispositif de contrôle (DMC) qui coordonne l'exécution de l'application logicielle et la restitution du flux multimédia résultant de cette exécution,
- le dispositif de restitution (DMR) qui restitue ce flux multimédia r.

Dans le cadre de l'invention, un dispositif supplémentaire intervient : il s'agit d'un dispositif d'exécution déportée de l'application logicielle sélectionnée par l'utilisateur (APPRUNTIME). Ce dispositif d'exécution est par exemple mis en œuvre sous un dispositif UPnP faisant partie du réseau.

On rappelle ici l'architecture et le principe de fonctionnement des entités UPnP définies dans le standard UPnP / DLNA. Puis on détaille les évolutions de cette architecture telles que proposées dans le cadre de l'invention et l'on explicite la méthode générale d'exécution d'application logicielle telle que proposée par l'invention.

### 5.1.1 Le standard UPnP et l'architecture UPnP A/V

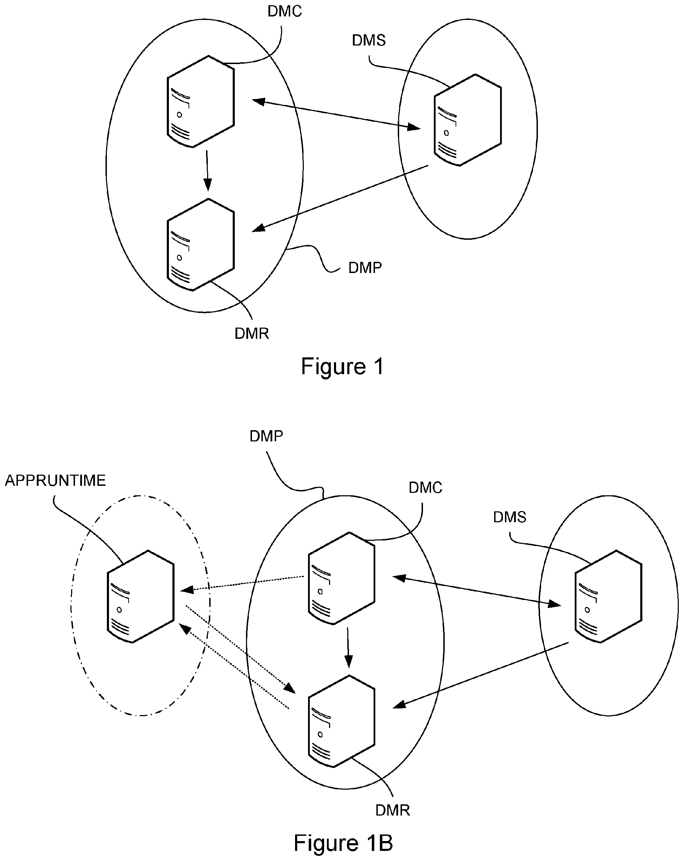

L'architecture UPnP AV / DLNA (de l'anglais « *UPnP Audio and Video* ») représentée en relation avec la figure 1, fait intervenir trois types d'entités dans un réseau pour la gestion des contenus audio, vidéo et photographique :
- le serveur de contenus multimédias DMS (de l'anglais « digital *média server* ») : c'est un dispositif UPnP qui partage ses contenus multimédias (comme l'audio, la vidéo ou des images) avec d'autres dispositifs UPnP du réseau ;
- le dispositif de contrôle, nommé également "point de contrôle" DMC UPnP (en abrégé CP, de l'anglais « *control point »* ou DMC, "digital média controller") : une entité qui peut détecter les dispositifs UPnP et leurs services, recevoir des événements de ces dispositifs et les commander en leur envoyant des commandes UPnP (nommées actions) ;
- le dispositif de restitution DMR (de l'anglais « digital *média renderer* ») : dispositif « esclave », en charge de la restitution d'un contenu sur un périphérique de l'équipement intégrant ce dispositif de restitution (par exemple, télé, chaîne HiFi, ...).

L'ensemble fonctionnel constitué du "point de contrôle" DMC et du dispositif de restitution DMR est appelé lecteur média UPnP DMP (de l'anglais « digital *média player* ») et constitue un deuxième type de dispositif de restitution. Parmi les lecteurs média UPnP DMP les plus répandus, on peut notamment citer les consoles de jeux comme la PS3™ ou la Xbox 360™ et les télévisions connectables, à un réseau, par exemple à un réseau domestique de leur propriétaire.

Chacun de ces dispositifs implémente des services spécifiés par UPnP. En particulier, un dispositif de restitution UPnP met en œuvre un service de gestion de connexion (appelé en anglais « *ConnectionManager* » dans le standard UPnP), un service de contrôle de restitution (appelé en anglais « *RenderingControl* » dans le standard UPnP) et un service de restitution (appelé en anglais « *AVTransport* » dans le standard UPnP).

Selon le standard UPnP, le scénario de restitution d'un contenu multimédia (images, textures, modèles 3D, textes, musiques etc) est le suivant :
- le point de contrôle UPnP obtient l'adresse de localisation d'un contenu multimédia à restituer, en interrogeant le serveur de contenus multimédias UPnP, doté d'une base de données d'indexation de contenus multimédias sous forme de répertoire de contenus multimédias (nommé en anglais « *Content Directory Service* » dans le standard UPnP) ;
- le point de contrôle UPnP transmet au dispositif de restitution UPnP sélectionné des paramètres de restitution d'un contenu multimédia, comprenant une adresse de localisation du contenu multimédia, en utilisant l'action "*SetAVTransportURI*" du service "AVTransport" du dispositif de restitution UPnP ;
- le point de contrôle UPnP déclenche la restitution du contenu multimédia en invoquant l'action de restitution "PLAY" du service "AVTransport" du dispositif de restitution UPnP;
- le dispositif de restitution obtient le contenu multimédia proprement dit par émission d'une requête HTTP "GET" à destination de l'entité désignée dans l'adresse de localisation du contenu multimédia envoyée au moyen de l'action "*SetAVTransportURI*" (par exemple un serveur de média).

Dans le standard UPnP, lorsque le dispositif de restitution choisi est de type DMR, on parle d'un modèle à trois boîtes, car trois dispositifs UPnP distincts doivent intervenir pour la mise en œuvre de la restitution d'un contenu multimédia (DMS + DMC + DMR). Lorsque le dispositif de restitution choisi est de type DMP, on parle d'un modèle à deux boîtes, car deux dispositifs UPnP distincts doivent intervenir pour la mise en œuvre de la restitution d'un contenu multimédia (DMS et DMP), le DMP cumulant, dans ce deuxième modèle à deux boites, les fonctions du DMC et du DMR.

### 5.1.2 Système mis en œuvre dans le cadre de l'invention

Comme précédemment évoqué, et en relation avec la figure 1B, le système de l'invention comprend dans ce mode de réalisation les principaux éléments suivants :
- un serveur de contenus, sous forme de serveur de contenus UPnP DMS (« Digital Media Server ») capable d'indexer des applications logicielles et de les présenter comme des contenus multimédias enrichis, présentant des propriétés spécifiques distinctes de celles des contenus multimédias traditionnellement indexés par un tel serveur de contenus ;
- un dispositif de restitution de contenus multimédia, sous forme de dispositif de restitution UPnP DMR (« Digital Media Renderer »), enrichi pour être capable de transmettre des commandes utilisateur (« user input ») (touches, boutons, joystick, souris, ...) à un dispositif d'exécution d'applications logicielles (« APPRUNTIME ») ;
- un dispositif de contrôle, sous forme de "point de contrôle" UPnP DMC (Digital Media Controller ou « Control Point »), conçu pour le pilotage de dispositifs de restitution de contenus multimédia et capable en outre d'exploiter les propriétés spécifiques aux contenus de type applications logicielles ;
- un dispositif d'exécution d'applications logicielles (« APPRUNTIME »), pouvant être mis en œuvre par exemple sous forme de service UPnP et qui est en charge d'exécuter l'application logicielle, de transmettre un flux vidéo vers un dispositif de restitution DMR, et de recevoir des notifications relatives aux actions effectuées par les utilisateurs ("user inputs") sur une interface utilisateur du dispositif de restitution DMR pour les transmettre à l'application logicielle en cours d'exécution. Ce dispositif constitue donc selon l'invention une entité UPnP additionnelle au système UPnP préalablement présenté en relation avec la figure 1.

### 5.1.3 Exécution d'application logicielle selon l'invention

L'invention propose une évolution du protocole UPnP afin d'exécuter l'application logicielle au moyen d'un dispositif d'exécution présentant des ressources adaptées à l'application logicielle sélectionnée, et restituer un flux multimédia résultant de cette exécution sur un dispositif de restitution UPnP choisi par l'utilisateur. En d'autres termes, l'invention permet d'exécuter une application logicielle sur un dispositif d'exécution APPRUNTIME déporté tandis que la restitution d'un flux résultant de l'exécution est réalisée par le dispositif de restitution UPnP.

Ainsi, le procédé d'exécution permet de limiter les accès au réseau Internet à partir du réseau UPnP, et ne nécessite pas la mise en œuvre d'une architecture complexe en dehors du réseau UPnP de l'utilisateur. Un autre avantage est que la restitution d'une application logicielle peut se faire sur un terminal peu puissant (tablette, Netbook, etc) en utilisant les ressources d'un équipement puissant (ordinateur personnel, console de jeux, etc).

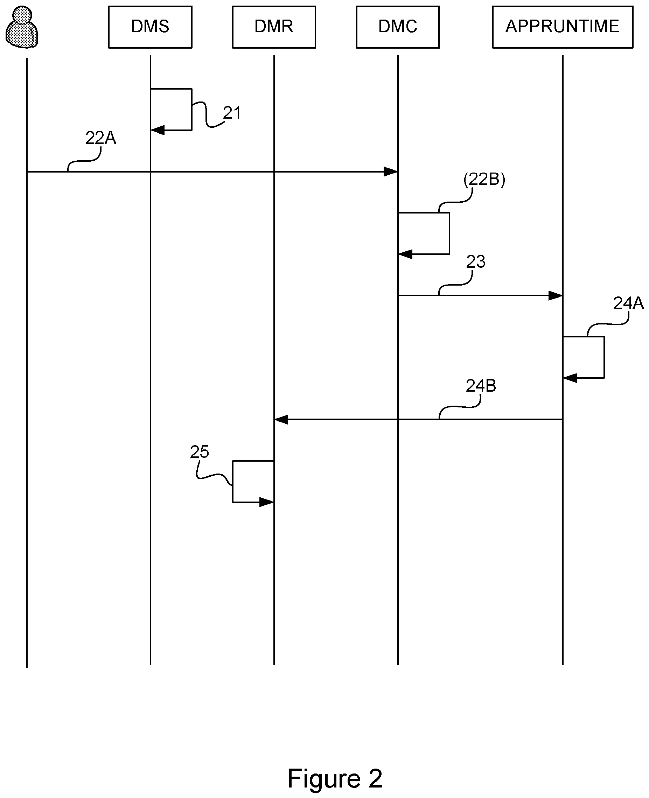

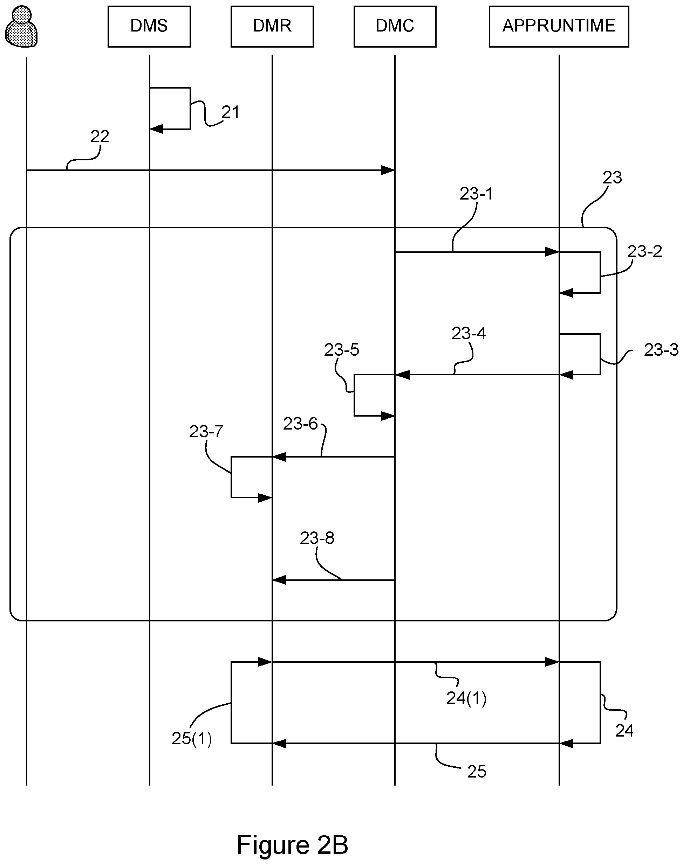

On présente, en relation avec la figure 2, les principales étapes générales du procédé 20 d'exécution. Plus particulièrement, le procédé d'exécution d'une application logicielle comprend :
- une étape d'indexation 21, dans une base de données d'indexation de contenus d'un serveur de contenus multimédias DMS, en tant que contenus multimédias, d'applications logicielles; cette étape d'indexation 21 est indépendante des étapes du procédé d'exécution d'une application et est décrite par la suite;
- une étape de sélection 22A par un utilisateur, parmi une pluralité d'applications logicielles indexées dans cette base de données d'indexation, d'une application logicielle à exécuter ;
- une étape d'initialisation 23 au sein d'un dispositif d'exécution APPRUNTIME d'une session applicative, en vue de l'exécution de l'application logicielle sélectionnée à l'étape 22A; cette initialisation comprend une étape de transmission, du dispositif d'exécution APPRUNTIME au dispositif de contrôle, de données de connexion au dispositif d'exécution ;
- une étape de déclenchement, par le dispositif d'exécution APPRUNTIME, de l'exécution 24A de l'application logicielle sélectionnée ;
- une étape de transmission 24B, du dispositif d'exécution APPRUNTIME au dispositif de restitution DMR, à travers une liaison de communication établie en utilisant les données de connexion transmises, d'un flux multimédia résultant de l'exécution de l'application logicielle sélectionnée;
- une étape de restitution 25 du flux multimédia réceptionné par le dispositif de restitution DMR.

Le procédé comprend également une étape de sélection 22B d'un dispositif d'exécution APPRUNTIME parmi une pluralité de dispositifs d'exécution disponibles. Cette sélection est réalisée en fonction des ressources des dispositifs d'exécution disponibles au sein du réseau.

Ainsi, l'invention offre de nouvelles possibilités d'exécution d'applications logicielles au sein des réseaux UPnPs sans nécessiter un accès à d'autres ressources que celles du réseau UPnP. Il n'est notamment pas nécessaire de faire appel à des infrastructures dites de « cloud computing » (informatique dans les nuages) pour mettre en œuvre l'application logicielle sélectionnée par l'utilisateur. Ceci permet d'augmenter l'indépendance de l'utilisateur d'une part et de profiter des ressources disponibles au sein du réseau personnel de l'utilisateur d'autre part. En effet, il n'est pas rare qu'un utilisateur possède des dispositifs UPnP (ordinateurs, consoles de jeux) qui ont par nature de très grandes capacités de traitement de données. La plupart du temps ces capacités ne sont que partiellement exploitées et ne peuvent pas être partagées avec les autres dispositifs du réseau. L'invention rend ce partage possible, notamment à l'aide du protocole UPnP que de nombreux dispositifs savent déjà mettre en œuvre.

Une application logicielle de l'invention peut consister par exemple à exécuter une application logicielle d'édition vidéo sur un ordinateur à partir d'un terminal mobile tel qu'un téléphone portable.

En d'autres termes, l'invention permet :
- de commander l'exécution d'une application logicielle au moyen d'un dispositif de contrôle UPnP de type DMC ou Control Point ;
- de déclencher l'exécution de l'application logicielle au moyen d'un dispositif d'exécution APPRUNTIME du réseau, qui prend en compte les actions effectuées par l'utilisateur sur le dispositif de restitution DMR, actions qui sont transmises par le dispositif de restitution DMR au dispositif d'exécution APPRUNTIME ;
- de visualiser le résultat de l'exécution de l'application logicielle sur le dispositif de restitution DMR (par exemple une télévision), par restitution d'un flux multimédia provenant du dispositif d'exécution APPRUNTIME et résultant de l'exécution de l'application logicielle sous l'effet des actions effectuées par l'utilisateur.

L'obtention du flux multimédia provenant du dispositif d'exécution APPRUNTIME est réalisée, selon l'invention, en établissant une liaison de connexion entre le dispositif d'exécution APPRUNTIME et le dispositif de restitution DMR au moyen de données de connexion fournies par le dispositif d'exécution, liaison via laquelle sera transmis ensuite le flux multimédia résultant de l'exécution de l'application logicielle.

Pour obtenir des commandes représentatives d'actions effectuées par l'utilisateur au moyen de périphérique du dispositif de restitution DMR, des pilotes de périphériques sont utilisés pour transmettre les événements correspondant aux commandes à l'application de restitution du dispositif de restitution DMR.

Ces commandes sont transmises au dispositif d'exécution APPRUNTIME qui se charge les transmettre à l'application logicielle destinataire, par exemple en notifiant des événements correspondant à ces commandes au processus, initié pour l'exécution de cette application logicielle, dont le dispositif d'exécution a obtenu un identifiant (« process handle ») lors du déclenchement de l'exécution de l'application logicielle.

Le flux multimédia est généré à la volée au cours de l'exécution de l'application logicielle par le dispositif d'exécution. Pour récupérer les données audio et/ou vidéo en sortie de l'application et générer un flux audio et/ou vidéo diffusé en continu (dit flux « streamé »), les mémoires tampon multimédia et les fonctions du système d'exploitation du dispositif d'exécution APPRUNTIME sont utilisées. Par exemple, sous Windows™, l'interface de programmation Win32 est utilisée pour accéder à cette mémoire. Le dispositif d'exécution se charge ensuite de constituer un flux multimédia (audio et/ou vidéo) qu'il transmet au dispositif de restitution sous forme d'un flux continu (envoi en "streaming").

Le flux multimédia reçu par le dispositif de restitution DMR est restitué comme n'importe quel autre flux multimédia en utilisant les fonctions d'affichage habituelles: il est transparent pour le dispositif de restitution que le flux multimédia soit généré à la volée au cours de l'exécution de l'application logicielle par le dispositif de restitution à partir de données générées par cette application logicielle.

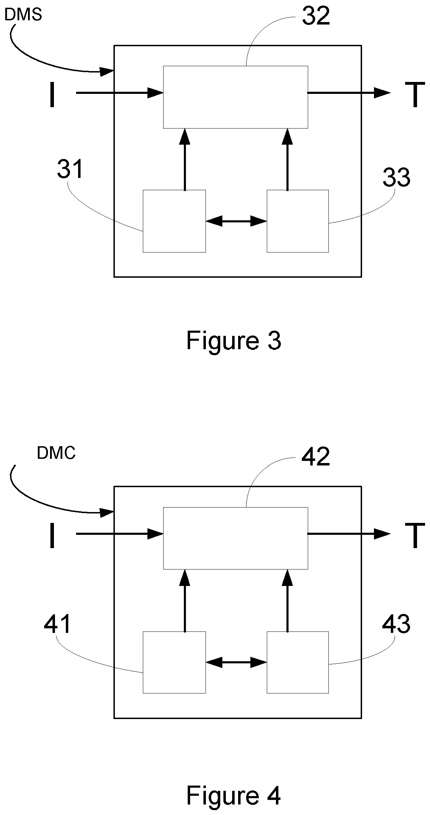

La figure 3 illustre une structure simplifiée d'un serveur de contenus multimédias DMS selon un mode de réalisation de l'invention. Par exemple, le serveur de contenus multimédias comprend une mémoire 31 constituée d'une mémoire tampon, une unité de traitement 32, équipée par exemple d'un microprocesseur, et pilotée par le programme d'ordinateur 33, mettant en œuvre un procédé de gestion d'indexation d'application logicielle.

A l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une application logicielle à indexer. Le microprocesseur de l'unité de traitement 32 met en œuvre les étapes du procédé de gestion d'indexation, selon les instructions du programme d'ordinateur 33, pour indexer et distribuer au moins une application logicielle à un dispositif du réseau auquel le serveur de contenus multimédias est lui-même connecté.

Pour cela, le serveur de contenus multimédias comprend, outre la mémoire tampon 31,
- des moyens d'indexation, dans une base de données d'indexation, d'au moins une application logicielle en tant que contenu multimédia par enregistrement de métadonnées de cette application logicielle et un enregistrement d'une adresse de localisation d'au moins un module logiciel conçu pour exécuter l'application logicielle,
- des moyens de transmission de métadonnées de la base de données d'indexation à un dispositif de contrôle (DMC) conçu pour le pilotage de dispositif de restitution de contenus multimédia.

Ces moyens sont pilotés par le microprocesseur de l'unité de traitement 32.

La figure 4 illustre une structure simplifiée d'un dispositif de contrôle DMC selon un mode de réalisation de l'invention.

Par exemple, le dispositif comprend une mémoire 41 constituée d'une mémoire tampon, une unité de traitement 42, équipée par exemple d'un microprocesseur, et pilotée par le programme d'ordinateur 43, mettant en œuvre le procédé de contrôle d'exécution d'une application logicielle selon l'invention.

A l'initialisation, les instructions de code du programme d'ordinateur 43 sont par exemple chargées dans une mémoire avant d'être exécutées par le processeur de l'unité de traitement 42. L'unité de traitement 42 reçoit en entrée des données d'indexation d'applications logicielles. Le microprocesseur de l'unité de traitement 42 met en œuvre les étapes d'un procédé de contrôle d'une application logicielle, selon les instructions du programme d'ordinateur4, pour sélectionner au moins une application logicielle préalablement indexée.

Pour cela, le dispositif de contrôle comprend, outre la mémoire tampon 41,
- des moyens d'obtention des métadonnées (M_{AS}) de la base de données d'indexation,
- des moyens de sélection, à partir desdites métadonnées obtenues, d'un contenu multimédia, le contenu multimédia sélectionné étant une application logicielle indexée en tant que contenu multimédia par le serveur de contenus multimédias,
- des moyens de sélection d'un dispositif de restitution de contenus multimédias (DMR) apte à restituer le flux multimédia résultant de l'exécution de l'application logicielle,
- des moyens de sélection d'un dispositif d'exécution (APPRUNTIME) apte à exécuter l'application logicielle,
- des moyens de transmission, au dispositif de restitution sélectionné APPRUNTIME, des métadonnées (M_{AS}) du contenu multimédia sélectionné.

Ces moyens sont pilotés par le microprocesseur de l'unité de traitement 42.

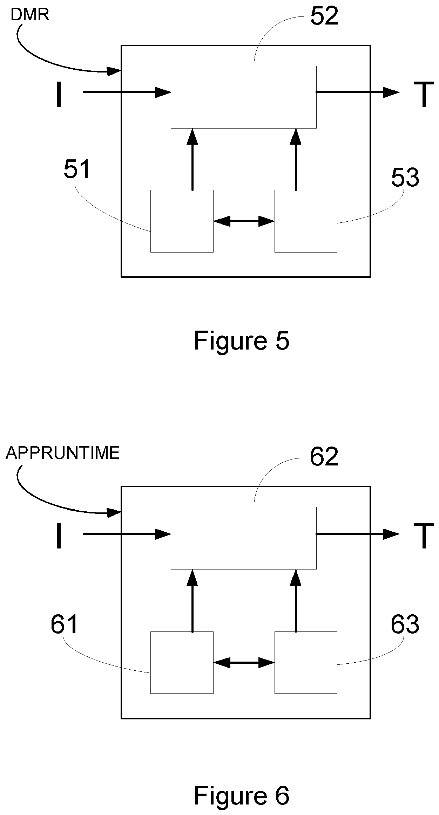

La figure 5 représente de manière simplifiée un exemple de structure d'un dispositif de restitution DMR de contenu multimédia selon un mode de réalisation de l'invention.

Par exemple, le dispositif de restitution DMR comprend une mémoire 51 constituée d'une mémoire tampon, une unité de traitement 52, équipée par exemple d'un microprocesseur, et pilotée par le programme d'ordinateur 53, mettant en œuvre un procédé de restitution d'une application logicielle selon l'invention.

A l'initialisation, les instructions de code du programme d'ordinateur 53 sont par exemple chargées dans une mémoire avant d'être exécutées par le processeur de l'unité de traitement 52. L'unité de traitement 52 reçoit en entrée un premier ensemble (URL_STREAMING) de données de connexion au dispositif d'exécution pour l'établissement d'une liaison de communication avec le dispositif d'exécution, liaison via laquelle un flux multimédia à restituer par le dispositif de restitution sera transmis par le dispositif d'exécution.

Ces données de connexion sont encodées et transmises sous forme d'une adresse de type URL, destinée à être utilisée, lors de l'émission par le dispositif de restitution DMR d'une requête HTTP d'obtention des données du contenu à restituer à la place de l'adresse URI_ORIGINAL, fournie par le serveur de contenus DMS auprès duquel l'application logicielle est indexée et localisant le fichier de données contenant le module logiciel conçu pour l'exécution de cette application logicielle. De cette manière, la requête d'obtention des données du contenu est émise, non pas vers le serveur de contenus comme c'est le cas dans le standard UPnP pour un contenu audio et/ou vidéo, mais vers le dispositif d'exécution APPRUNTIME.

L'unité de traitement 52 reçoit en outre un deuxième ensemble (URL_USER_INPUT) de données de connexion au dispositif d'exécution pour l'établissement d'une liaison de communication avec le dispositif d'exécution, liaison via laquelle des commandes à exécuter par une application logicielle seront transmises au dispositif d'exécution par le dispositif de restitution.

Le microprocesseur de l'unité de traitement 52 met en œuvre les étapes du procédé de restitution d'un flux multimédia résultant de l'exécution d'une application logicielle par le dispositif de d'exécution (APPRUNTIME), selon les instructions du programme d'ordinateur 53.

Pour cela, le dispositif de restitution comprend, outre la mémoire tampon 51, des moyens de réception d'un flux multimédia en provenance du dispositif d'exécution et des moyens de transmission au dispositif d'exécution de commandes représentatives d'actions effectuées par un utilisateur au moyen de périphériques du dispositif de restitution DMR. Ces moyens sont pilotés par le microprocesseur de l'unité de traitement 52.

La figure 6 illustre un exemple de structure simplifiée d'un dispositif d'exécution d'application logicielle APPRUNTIME selon un mode de réalisation de l'invention.

Par exemple, le dispositif d'exécution comprend une mémoire 61 constituée d'une mémoire tampon, une unité de traitement 62, équipée par exemple d'un microprocesseur, et pilotée par le programme d'ordinateur 63, mettant en œuvre un procédé d'exécution d'une application logicielle selon l'invention.

A l'initialisation, les instructions de code du programme d'ordinateur 63 sont par exemple chargées dans une mémoire avant d'être exécutées par le processeur de l'unité de traitement 62. L'unité de traitement 62 reçoit en entrée au moins une instruction d'exécution d'une application logicielle. Le microprocesseur de l'unité de traitement 62 met en œuvre les étapes du procédé d'exécution d'une application logicielle, selon les instructions du programme d'ordinateur 63.

Pour cela, le dispositif d'exécution d'une application logicielle comprend, outre la mémoire tampon 61, des moyens de réception de commande représentatives d'actions opérées par un utilisateur au moyen de périphériques du dispositif de restitution DMR et des moyens de transmission d'un flux multimédia résultant de l'exécution de l'application logicielle. Ces moyens sont pilotés par le microprocesseur de l'unité de traitement 62.

En résumé, le dispositif d'exécution APPRUNTIME, qui peut se présenter sous la forme d'un composant matériel ou logiciel spécifique, est un module (par exemple un service UPNP ou un dispositif UPNP) qui fait le lien entre le monde UPNP et l'application logicielle. Il sert à :
- initialiser une session applicative sur un équipement (ordinateur, console de jeu, etc.) sur lequel l'application logicielle est à exécuter ;
- fournir au dispositif de contrôle DMC les données de connexion (adresse IP, port, identifiant de session, etc.) au dispositif d'exécution et cette session applicative, à utiliser pour l'établissement du flux multimédia résultant de l'exécution de l'application logicielle et du flux de commandes à exécuter par l'application logicielle, ces données de connexion étant fournies par exemple sous forme d'URL utilisable par le dispositif de restitution DMR;
- déclencher l'exécution de l'application logicielle et pendant cette exécution :
   - constituer un flux multimédia continu à partir des données (audio et/ou vidéo) résultant de l'exécution de l'application logicielle et transmettre ce flux au dispositif de restitution DMR ;
   - transmettre à l'application logicielle les commandes, représentatives des actions effectuées par l'utilisateur, reçues du dispositif de restitution DMR.

Le dispositif de contrôle est ainsi utilisable pour exécuter n'importe quelle application logicielle désignée par une adresse de localisation fournie par le dispositif de contrôle, sous réserve de disposer d'un environnement d'exécution compatible avec celui requis pour l'exécution de l'application logicielle. En effet, l'exécution de l'application logicielle est prise en charge par le système d'exploitation de l'équipement sur lequel est mis en œuvre le dispositif d'exécution. Le dispositif d'exécution peut néanmoins, au cours de l'exécution de l'application logicielle, accéder aux données générées par cette application logicielle et envoyer des commandes à cette application au moyen de fonctions du système d'exploitation qui permettent ce type d'interaction avec un programme en cours d'exécution.

Par la suite, on présente un mode de réalisation dans lequel les applications logicielles sont des jeux vidéo. Il est clair que ce mode de réalisation ne limite en rien la portée des revendications et que l'invention peut également être mise en œuvre pour tout type d'application logicielle comme par exemple des livres interactifs, dans lesquels le moteur permet de lancer la restitution d'un contenu indépendant du moteur.

### 5.2. Description d'un mode de réalisation du procédé d'exécution d'une application logicielle.

On décrit ci-après un mode de réalisation de l'exécution d'une application logicielle du type jeu vidéo au sein d'un réseau UPnP. Une explication de ce qu'est un jeu vidéo et les modifications techniques apportées à chaque dispositif UPnP sont présentées.

### 5.2.1. Définition d'un jeu vidéo

Traditionnellement, on décompose un jeu vidéo, en deux éléments. D'une part, un ensemble de contenus multimédias (images, textures, modèles 3D, textes, musiques, etc), et d'autre part, au moins un module logiciel (scripts, code de programme exécutable et/ou interprétable, ...), en mesure d'orchestrer la restitution de ces contenus multimédias à l'écran afin que le joueur vive son expérience de jeu. Ces deux éléments peuvent être encodés soit dans des fichiers de données distincts soit dans un seul et même fichier de données (cas des fichiers fichier .WAD intégrant à la fois la logique d'un jeu (script) et les images / sons à restituer au fur et à mesure du déroulement du jeu).

Dans certain cas, le module logiciel peut se présenter sous la forme d'un programme autonome (par exemple, un exécutable « .exe ») ou d'un programme nécessitant un moteur d'exécution (par exemple, un fichier binaire « .jar »).

Un module logiciel nécessitant un moteur d'exécution est par exemple un script nécessitant un interpréteur de script (jouant le rôle d'un moteur d'exécution) apte à interpréter ce script ou, un composant logiciel codé dans un langage exploitable par un moteur d'exécution se présentant sous la forme d'une machine virtuelle.

Certains développeurs de jeu vidéo choisissent de développer un module logiciel de jeu vidéo suffisamment générique, non spécifique à un jeu vidéo précis mais commun à une série de jeux du même type, en mesure d'orchestrer des logiciels différents si la partie « contenu multimédia» est modifiée.

Parfois encore, le module logiciel de jeu vidéo est un programme autonome (un « *player de jeu* », c'est-à-dire un programme sous forme de code exécutable (codé dans un fichier d'extension « .exe » dans le cas du système d'exploitation Windows) et les contenus multimédias jeux vidéo sont stockés dans un format propre au module logiciel de jeu vidéo.

Certains jeux s'exécutent par l'intermédiaire d'un moteur d'exécution prenant la forme de machine virtuelle. Une machine virtuelle met en œuvre du code intermédiaire d'un module logiciel, qui a été compilé de manière normalisée pour être exécuté sur n'importe quelle plateforme disposant d'une machine virtuelle adéquate. Ainsi, une application logicielle s'exécutant sur une machine virtuelle est composée d'un ou plusieurs modules logiciels pouvant être téléchargés indépendamment de la machine virtuelle en question. Parmi les jeux mis en œuvre sur une machine virtuelle on peut citer les jeux ou applications logicielles en langage Flash (fichiers .SWF), les jeux ou applications logicielles en Java (fichiers .JAR), Silverlight, le jeu d'aventure Lucas Art (*« ScummVM »*) etc.

### 5.2.2. Indexation et partage des contenus de type jeux

Comme explicité préalablement, le contenu de type jeu est par nature un ensemble de données tel que des images, des textures, des modèles 3D, des textes, musiques, extraits sonores, scripts pour les acteurs « intelligents »du jeu, etc.

En fonction du moteur de jeu, ces données peuvent être :
- regroupées au sein d'un seul et même fichier (ex : fichier .WAD du moteur de jeu Doom) ;
- référencées dans un fichier type XML qui indique l'emplacement de tout les fichiers de données ;
- ou bien encore stockées dans une arborescence bien précise attendue par le moteur.

Dans le premier et le deuxième cas, ci-dessus, l'adresse (URL) de la ressource de l'élément UPnP référence un nom de fichier. Dans le troisième cas, il référence le répertoire qui contient les données.

Pour qu'un contenu de type jeu puisse être indexé et partagé par un serveur de contenus multimédias DMS, celui-ci doit pouvoir obtenir les métadonnées de contenu et les enregistrer dans une base de données d'indexation de contenu, qui est nommée CDS (« Content Directory Service ») dans le standard UPnP.

Selon le standard UPnP, pour chaque contenu multimédia constituant un objet, un ou plusieurs champs de données sont utilisés pour mémoriser les propriétés de cet objet : ces champs de données constituent les métadonnées de cet objet.

Une des propriétés d'un objet est sa classe d'appartenance. Chaque objet est en effet affecté à une classe d'objet, le nom de cette classe d'objet étant mémorisé dans un champ de données nommé "upnp:class".

Les classes d'objets sont organisées de manière hiérarchisée et arborescente, certaines classes étant dérivées d'autres classes, selon ce qui est usuel en conception orientée objet. La racine de cette arborescence est la classe de base nommée "object". De cette classe de base "object", sont dérivées deux classes principales : d'une part, la classe "object.item", définissant un élément ou contenu multimédia (morceau de musique et/ou son et/ou séquence vidéo et/ou image et/ou texte, etc), d'autre part, la classe "object.container", définissant un objet container ou ensemble de plusieurs contenus multimédias.

De la classe "object.container" est dérivée par exemple la classe "object.container.musicAlbum", définissant un album de musique comprenant plusieurs morceaux de musique.

De la classe "object.item" sont dérivées par exemple les classes "object.item.textItem", définissant un contenu texte, et "object.item.audioItem", définissant un contenu audio.

A chaque contenu multimédia (c'est-à-dire à chaque objet appartenant à la classe "object.item") sont associées une ou plusieurs ressources, définissant chacune un fichier de données de contenu multimédia.

Etant donné qu'il existe des technologies variées pour les moteurs de jeux et des formats de jeux différents, chaque jeu, dans ce mode de réalisation, s'accompagne d'un ensemble de métadonnées, décrivant une application logicielle et identifiant les éléments qui la composent.

Les métadonnées spécifiques à un contenu de type jeu sont les suivantes :
- Genre : [Chaîne de caractères] (ex : Actions, Aventure, Shoot'them up) : type de jeu ;
- Rating : [Nombre] (ex : 18 and more) : Age légal minimum d'utilisation ;
- Difficulty: [Chaîne de caractères] (ex : Easy, Médium, Hard) : Difficulté globale du jeu ;
- Life span: [Nombre] (ex : 5 hours) : Durée de vie du jeu, c'est à dire temps de jeu total prévu pour un joueur moyen ;
- Required Peripherals: [Liste de Chaîne de caractères] (ex: Keyboard, Joystick) : Périphériques nécessaires pour exécuter ce jeu ;
- Optional Peripherals: [Liste de Chaîne de caractères] (ex: Wheel) : Périphérique pouvant être utilisé avec le jeu pour une expérience améliorée ;
- List of compatible Game Engines - Cinq parameters par "Game Engine" :
   *1*) Environment [Chaîne de caractères] (ex: Windows, Linux, Playstation 3, Xbox 360 etc) : *Environnement d'exécution de jeu*
   2) Environment version : [Chaîne de caractères] : version logicielle de l'environnement d'exécution;
   3) Name : [Chaîne de caractères] (ex : Flash, Java, Doom, ScummVM ou *Native* pour les applications logicielles binaires codées en natif pour l'environnement cible) : *Nom du module logiciel principal ou Native*
   4) Version : [Chaîne de caractères]
   5) Game Engine Provider URL [Chaîne de caractères] : *Adresse vers le fournisseur de game engine disposant de ce game engine en particulier, dans la bonne version et pour le bon environnement.*

Ce fichier de description peut être défini dans un formalisme XML.

Ainsi, le serveur de contenus multimédias DMS analyse ces fichiers de description et remplit sa base de données (son CDS).

De manière à pouvoir traiter de manière différenciée les contenus qui sont des applications logicielles, les métadonnées d'un tel contenu comprennent une indication selon laquelle ce contenu est une application logicielle.

Deux variantes de réalisation sont possibles à cet endroit.

Dans une première variante, une nouvelle classe d'objet, adaptée et propre aux applications logicielles, est définie. Cette classe est nommée la classe "Applications logicielles". Cette classe "Applications logicielles" est dérivée de la classe "*object.container*" (dans ce cas une application est vue comme un ensemble de contenus multimédia) ou dérivée de la classe *"object.item"* (dans ce cas une application est vue comme un ensemble de contenus multimédia), par exemple :
- *object*.*container*. *applicationContainer ou*
- *object.item.applicationItem.*

Dans une deuxième variante, les contenus de type jeu sont ensuite exposés par le serveur de contenus DMS comme des contenus vidéo (object class: "object.item.videoltem") décrits par des propriétés spécifiques.

En plus des répertoires "standards" pour la musique, les photos ou la vidéo, le DMS crée une arborescence pour les jeux ou il insère les jeux dans l'arborescence des vidéos. Dans ce cas, la classe d'appartenance d'un contenu ne permet pas de déterminer si ce contenu est une application logicielle ou non. Il faut utiliser pour cela les métadonnées présentant des propriétés qui sont propres aux applications logicielles, par exemple les propriétés " Required Peripherals", "Environment", "Environment version", "Game Engine Provider" , "Difficulty" etc.

Un exemple de métadonnées est présenté en annexe au point 2.

Dans au moins un mode de réalisation, l'invention comprend ainsi une étape d'indexation de l'application logicielle, en l'occurrence du jeu vidéo, par enregistrement des métadonnées (étape 21, figure 2) propres aux contenues de types jeu vidéo, telles que présentée en annexe au point 2. Cette indexation suppose de déterminer que le contenu à indexer est un contenu du type jeu vidéo, de déterminer si un moteur d'exécution est nécessaire à l'exécution du jeu vidéo (il peut s'agir d'une machine virtuelle ou d'un programme d'ordinateur particulier), et de déterminer, au cas où le moteur ne serait pas déjà présent sur le dispositif d'exécution, une adresse de localisation, au sein d'un réseau de communication, de ce moteur d'exécution (le réseau de communication peut être le réseau UPnP de l'utilisateur ou le réseau Internet par exemple) et d'enregistrer, au sein d'une base de donnée, une adresse de localisation d'un module logiciel conçu pour exécuter l'application logicielle et une adresse de localisation dudit moteur d'exécution.

En d'autres termes, à l'issue de cette phase d'indexation, le serveur de contenus multimédias DMS dispose des données nécessaires pour permettre la mise en œuvre du procédé d'exécution tel que décrit préalablement à savoir :
- l'adresse de localisation d'un module logiciel ;
- l'identification du moteur nécessaire pour exécuter le jeu vidéo ; et
- adresse de localisation dudit moteur d'exécution permettant d'obtenir et d'installer ce moteur d'exécution s'il n'est pas installé.

Comme cela est détaillé par la suite, ces données d'indexation sont transmises sur requête UPnP au dispositif de contrôle DMC afin de permettre à un utilisateur de sélectionner le jeu vidéo à exécuter. Le dispositif de contrôle DMC permet également de sélectionner un dispositif de restitution et de sélectionner un dispositif d'exécution qui va exécuter ce jeu. Le dispositif de contrôle DMC permet enfin de déclencher l'exécution du jeu en envoyant une commande de restitution au dispositif de restitution sélectionné afin que celui-ci se connecte au dispositif d'exécution.

Un flux multimédia, sous forme de flux « streamé » (flux diffusé en continu, de l'anglais « streaming ») est alors transmis au dispositif de restitution pour être restitué par ce dernier. Les données audio et vidéo résultant de l'exécution de l'application sont de préférence multiplexées pour générer un flux continu unique.

### 5.2.3. Vérification de la conformité du dispositif de restitution DMR et sélection du dispositif d'exécution « APPRUNTIME » compatible pour l'exécution déportée.

En UPnP AV, de manière générale, le dispositif de contrôle DMC vérifie la compatibilité du dispositif de restitution DMR avec le contenu sélectionné par l'utilisateur.

Dans ce mode de réalisation de l'invention appliquée au jeu vidéo, le dispositif de contrôle DMC effectue des vérifications spécifiques. D'une part le dispositif de contrôle DMC vérifie la conformité du dispositif de restitution DMR sélectionné par l'utilisateur. Cette vérification est effectuée à l'aide des métadonnées spécifiques d'indexation fournies par le serveur de contenus multimédias. D'autre part le dispositif de contrôle DMC identifie et sélectionne un dispositif d'exécution « APPRUNTIME » compatible pour l'exécution déportée selon le procédé de l'invention.

Pour vérifier la conformité du dispositif de restitution DMR sélectionné par l'utilisateur, le dispositif de contrôle DMC parcourt toutes les ressources associées au jeu et les compare aux formats/protocoles supportés par le dispositif de restitution DMR obtenus par l'action *GetProtocolinfo()* du service *ConnectionManager* du dispositif de restitution DMR.

Les contenus de type application logicielle sont identifiables par le dispositif de contrôle DMC au moyen des métadonnées décrites précédemment. Pour ces contenus, le dispositif de contrôle DMC doit effectuer une vérification visant à s'assurer que le dispositif de restitution DMR dispose des périphériques requis (clavier, souris, joystick) pour l'exécution du jeu et qu'il est doté de moyens pour transmettre les actions utilisateur à un module tiers.

Il est donc nécessaire, dans ce mode de réalisation, d'ajouter une action UPnP pour que le dispositif de restitution DMR fournisse ces informations et que le dispositif de contrôle DMC puisse effectuer ces vérifications à l'aide des métadonnées de jeu disponibles par l'intermédiaire du serveur de contenus multimédias DMS. Les informations sur les périphériques (clavier, souris, joystick, ...) supportés par le dispositif de restitution DMR peuvent être retournées en réponse à une action nommée par exemple "*GetPeripherals*" qui est ajoutée au service "*ConnectionManager*" ou "*RenderingControl*" du dispositif de restitution DMR.

Le dispositif de contrôle DMC recherche également s'il existe un ou plusieurs dispositifs d'exécution « APPRUNTIME » sur le réseau UPnP capables d'exécuter le contenu de type jeu.

Selon un mode de réalisation, le dispositif d'exécution « APPRUNTIME » est réalisée sous forme de service UPnP, pour l'exécution d'applications logicielles, mis en œuvre au sein d'un dispositif UPnP, ce service étant annoncé par le dispositif UPnP lors de la mise en œuvre du protocole de découverte SSDP (de l'anglais pour « Simple Service Discovery Protocol ») tel que prévu dans le standard UPnP. Ce service peut être implémenté de préférence sur des équipements puissants de type PC « Media Center » ou consoles de jeux (PS3 ou Xbox 360). Ainsi, le dispositif d'exécution « APPRUNTIME » est lui-même un dispositif UPnP à part entière.

Lors de la mise en œuvre de ce protocole de découverte, le dispositif d'exécution « APPRUNTIME » transmet au dispositif de contrôle DMC une liste d'actions (commandes) invocables auprès du dispositif d'exécution et déclare ses capacités et ressources. Ainsi le dispositif de contrôle DMC peut évaluer si le dispositif d'exécution « APPRUNTIME » est capable d'exécuter le contenu de type jeu, en comparant les capacités et ressources déclarées aux métadonnées d'une application logicielle indexée par le serveur de contenus multimédias DMS.

Selon l'invention, les actions exposées par le dispositif d'exécution « APPRUNTIME » sont les suivantes :
- *GetEnvironmentDescription()* : retourne la liste des environnements d'exécution compatibles (exécutable natif Windows, Java, Flash, ...)
- *GetSystemResources() :* retourne les ressources libres sur l'équipement en termes de mémoire et de CPU (puissance du processeur).

Si le dispositif de contrôle DMC détecte plusieurs dispositifs d'exécution « APPRUNTIME » sur le réseau UPnP (par exemple, un PC et une console de jeux), il choisit le dispositif le plus adéquat pour exécuter le contenu de type jeu en évaluant les environnements requis par le jeu et les ressources disponibles (CPU et mémoire) sur les dispositifs d'exécution « APPRUNTIME » disponibles pour exécuter le jeu.

Ainsi, dans ce mode de réalisation de l'invention, la sélection du dispositif d'exécution DMR compatible pour l'exécution déportée est réalisée par un dispositif de contrôle DMC.

En d'autres termes, de manière synthétique, préalablement à l'exécution de l'application logicielle, il est procédé, selon l'invention, à :
- une vérification par le dispositif de contrôle DMC :
   - de la compatibilité de l'environnement d'exécution requis par l'application logicielle sélectionnée (environnement, périphériques) ;
   - de la présence d'un ou plusieurs dispositifs d'exécution « APPRUNTIME » aptes à exécuter l'application logicielle sélectionnée.
- une obtention, par le dispositif d'exécution « APPRUNTIME », d'un moteur d'exécution ou d'un élément d'un moteur d'exécution, lorsque le moteur d'exécution ou l'élément dudit moteur d'exécution est absent du dispositif d'exécution « APPRUNTIME ».

### 5.2.5. Restitution d'un jeu sur un dispositif de restitution DMR à partir du dispositif d'exécution « APPRUNTIME » préalablement sélectionné.

Dans le cas où, d'une part, le jeu (peut être restitué sur le dispositif de restitution DMR et, d'autre part, un dispositif d'exécution « APPRUNTIME » apte à exécuter le jeu a été détecté sur le réseau UPnP par le dispositif de contrôle DMC, il est procédé à une initialisation de mécanismes qui, selon l'invention, permettent l'exécution du jeu sélectionné par l'utilisateur.

Le premier mécanisme consiste à transformer les données audio et/ou vidéo résultant de l'exécution du jeu sur le dispositif d'exécution « APPRUNTIME » en un flux à diffuser en continu vers le dispositif de restitution DMR. Un tel flux est également appelé flux « streamé ». L'audio et la vidéo sont multiplexés dans ce flux « streamé ».

Une brique logicielle particulière, qui est mise en œuvre dans le cadre de l'invention, permet de transformer le résultat de l'exécution du jeu vidéo sur le dispositif d'exécution « APPRUNTIME » en un flux multimédia « streamé » qui est transmis au dispositif de restitution DMR pour y être restitué. On note d'ailleurs que le flux peut être transmis à plusieurs dispositifs de restitution DMR du réseau UPnP de manière simultanée, ce qui permet une restitution sur différents dispositifs de restitution DMR.

Afin de permettre une prise en compte des actions des utilisateurs dans la mise en œuvre de l'application logicielle et d'indiquer au dispositif de restitution où il doit rechercher le flux « streamé », l'invention propose également un deuxième mécanisme sous la forme d'une technique en deux temps :
- une création de session applicative, au sein du dispositif d'exécution,
- une initialisation de l'exécution de l'application logicielle qui comprend une utilisation d'au moins deux adresses de localisation permettant d'échanger des données entre le dispositif de restitution DMR et le dispositif d'exécution « APPRUNTINE ». Dans ce mode de réalisation de l'invention, les adresses en question correspondent respectivement aux premières et deuxièmes données de connexion au dispositif d'exécution déjà présentées :
   - la première adresse permet de connaître la source du flux « streamé »; c'est à cette adresse que le flux issu de l'exécution de l'application logicielle est transmis ; cette adresse est transmise au dispositif de restitution ; c'est le dispositif de restitution DMR qui va chercher le flux « streamé » à cette adresse.
   - la deuxième adresse est l'adresse à laquelle les commandes représentatives d'actions effectuées par l'utilisateur au moyen de périphériques du dispositif de restitution sont transmises par le dispositif de restitution DMR ; c'est à cette adresse que les commandes de contrôle du jeu (haut, bas, avance, arrière, sauter, tirer, etc.) sont obtenues afin de prendre en compte les actions réalisées par l'utilisateur ; cette adresse est également transmise au dispositif de restitution.

Plus particulièrement la restitution d'un jeu sur un dispositif de restitution DMR à partir du dispositif d'exécution « APPRUNTIME » préalablement sélectionné comprend les étapes ci-dessous, décrites en relation avec la figure 2B.

On suppose que l'utilisateur du dispositif de contrôle a sélectionné une application logicielle pour laquelle une exécution est demandée et que le dispositif de contrôle DMC dispose des métadonnées de cette application logicielle, telles qu'enregistrées par le serveur de contenus DMS. Ces métadonnées comprenant une indication selon laquelle le contenu concerné est une application logicielle, le dispositif de contrôle DMC engage une procédure de mise en relation du dispositif de restitution sélectionné et du dispositif d'exécution sélectionné, selon ce qui est décrit ci-dessous.
1) Le dispositif de contrôle DMC envoie au dispositif d'exécution une instruction d'initialisation de l'application logicielle, en appelant (23-1) une action nommée par exemple "*PrepareForStreaming*" du dispositif d'exécution « APPRUNTIME » sélectionné, cette instruction étant accompagnée de l'adresse URI_ORIGINAL d'une ressource associée à l'application logicielle, sous forme de fichier de données, comprenant le module logiciel conçu pour l'exécution de l'application logicielle. Cette instruction est également accompagnée de la liste des environnements supportés par le jeu, liste extraite des métadonnées du contenu fourni par le serveur de contenu DMS.
2) Le dispositif d'exécution « APPRUNTIME » vérifie (23-2) qu'il est capable d'exécuter le jeu en vérifiant si un moteur d'exécution (c'est-à-dire par exemple une machine virtuelle) est requis; si l'équipement sur lequel est exécuté le dispositif d'exécution « APPRUNTIME » ne comprend pas un tel moteur d'exécution, le dispositif d'exécution « APPRUNTIME » est téléchargé par le dispositif d'exécution « APPRUNTIME » (par exemple, téléchargement d'une machine virtuelle ou d'un logiciel adéquat).
3) Le dispositif d'exécution « APPRUNTIME » réserve des ressources pour l'exécution du jeu et crée une session (23-3) applicative pour l'exécution de l'application logicielle identifiée par l'adresse URI_ORIGINAL. La session applicative est identifiée par un identifiant ID_SESSION. Lorsque le dispositif d'exécution « APPRUNTIME » est capable d'exécuter plusieurs applications logicielles (si sa puissance de calcul et sa mémoire le permettent), une session applicative est créée par le dispositif d'exécution pour chaque application logicielle à exécuter. Cet identifiant ID_SESSION permet dans ce cas de gérer les différentes sessions applicatives créées et les liaisons de communication entre le dispositif d'exécution et le ou les dispositifs de restitution visés pour chaque application logicielle concernée. Le dispositif d'exécution « APPRUNTIME » obtient un module logiciel conçu pour exécuter l'application logicielle visée en téléchargeant le contenu stocké à l'adresse URI_ORIGINAL reçue.
4) Le dispositif d'exécution «APPRUNTIME» répond (23-4) à l'action *PrepareForStreaming()* par un code de retour (OK ou un code d'erreur) et en envoyant les premières et deuxièmes données de connexion : d'une part, une adresse de type URL de diffusion en continu (streaming) notée URL_STREAMING et, d'autre part, une adresse de type URL notée URL_USER_INPUT qui sert à transmettre les commandes à exécuter par l'application logicielle. Ces deux adresses contiennent l'identifiant de session ID_SESSION identifiant la session applicative au cours de laquelle le dispositif d'exécution « APPRUNTIME » doit initialiser l'application logicielle considérée.
   a. exemple d'URL_STREAMING : http://<IP address APPRUNTIME<:<Port APPRUNTIME>/stream?sessionID=ID_SESSION
   b. exemple URL_USER_INPUT : http://<IP address APPRUNTIME>:<Port APPRUNTIME>/userInput? sessionID=ID_SESSION?inputType=keyboard&keycode=a ou ...? sessionID=ID_SESSION ?inputType=mouse_button_pressed&button=LEFT ou .../ sessionID=ID_SESSION?inputType=mouse_pos&x=340&y=448
5) Suite à la réception de la réponse du dispositif d'exécution, le dispositif de contrôle DMC modifie (23-5) les métadonnées du contenu de type jeu sélectionné pour y ajouter une propriété, codée par exemple sous la forme "specific:url_user_input", qui précise l'adresse URL_USER_INPUT à utiliser pour transmettre les commandes à exécuter par l'application logicielles.
6) Le dispositif de contrôle DMC transmet au dispositif de restitution DMR des paramètres de restitution d'un contenu multimédia: lorsque le contenu multimédia visé est un flux multimédia résultant de l'exécution d'une application logicielle, ces paramètres comprennent les premier et deuxième ensembles de données de connexion; le dispositif de contrôle DMC transmet ces paramètres de restitution en invoquant (23-6) l'action "*SetAVTransportURI"* du service "AVTransport" du dispositif de restitution DMR: cette action comprenant en paramètre :
   - l'adresse à laquelle le contenu multimédia à restituer est susceptible d'être obtenu, en l'occurrence l'adresse URL_STREAMING obtenue par le dispositif d'exécution « APPRUNTIME »
   - des données d'indexation ou métadonnées du contenu multimédia à restituer, en l'occurrence les métadonnées modifiées comme décrit précédemment.
7) Le dispositif de restitution DMR analyse (23-7) les métadonnées modifiées transmises en paramètre de l'action "*SetAVTransportURI"*; il extrait notamment l'adresse URL_USER_INPUT; ces métadonnées modifiées comprennent, du fait de la présence de la propriété "url_user_input", une indication supplémentaire selon laquelle le contenu à restituer est un flux multimédia résultant de l'exécution d'une application logicielle; le dispositif de restitution détermine donc qu'il doit transmettre à cette application logicielle, au cours de son exécution, des commandes représentatives d'actions effectuées par un utilisateur au moyen de périphériques du dispositif de restitution; le dispositif de restitution DMR est ainsi informé de la manière dont doit être réalisée la restitution du contenu multimédia pour lequel cette action "*SetAVTransportURI"* a été invoquée.
8) Le dispositif de contrôle DMC envoie une commande de restitution du contenu multimédia pour lequel des paramètres de restitution ont été transmis au moyen de l'action "*SetAVTransportURI"*; le contenu multimédia visé par cette commande de restitution étant un flux multimédia résultant de l'application logicielle exécutée par le dispositif d'exécution, cette commande de restitution est destinée à déclencher une restitution par ledit dispositif de restitution du flux multimédia résultant de l'exécution de l'application logicielle; l'envoi de cette commande s'effectue en invoquant (23-8) l'action *Play()* du service "*AVTransport"* du dispositif de restitution DMR.
9) Suite à la réception de la commande de restitution, le dispositif de restitution DMR demande à établir une première liaison de communication avec le dispositif d'exécution afin de recevoir via cette première liaison de communication le flux multimédia résultant de l'exécution de l'application; pour cela, le dispositif de restitution DMR émet (24-1) une requête HTTP vers l'adresse URL_STREAMING reçue dans les paramètres de restitution, donc se connecte au dispositif d'exécution « APPRUNTIME » pour obtenir le flux multimédia et restituer ce flux multimédia.
10) Suite à la réception de la requête HTTP, le dispositif d'exécution « APPRUNTIME » déclenche l'exécution (24) de l'application logicielle (du jeu vidéo) au cours de la session applicative créée précédemment et accepte d'établir la première liaison de communication.
11) Le dispositif d'exécution « APPRUNTIME » obtient les images et/ou sons produits par le jeu et génère à partir de ces images et/ou sons un flux multimédia qu'il transmet (25) vers le dispositif de restitution DMR via la première liaison de communication. La transmission peut se baser sur les protocoles de transmission de télévision numérique comme par exemple le MPEG2-TS avec du multiplexage vidéo et audio;
12) Le dispositif de restitution DMR reçoit (25-1) le flux multimédia transmis via cette première liaison de communication, extrait les données audio et/ou vidéo de ce flux puis restitue ce flux multimédia: affichage du contenu vidéo et restitution sonore du contenu audio du flux; l'utilisateur peut alors se servir de périphériques (clavier, souris, ...) du dispositif de restitution DMR pour interagir sur l'exécution de l'application logicielle, comme si cette exécution était réalisée localement par le dispositif de restitution DMR;
13) Le dispositif de restitution DMR demande également à établir une deuxième liaison de communication avec le dispositif d'exécution afin de transmettre via cette deuxième liaison de communication des commandes à exécuter par l'application logicielle; pour cela, le dispositif de restitution DMR émet (24-1) une requête HTTP vers l'adresse URL_USER_INPUT reçue dans les paramètres de restitution, et se connecte ainsi au dispositif d'exécution « APPRUNTIME ».
14) Suite à la réception de cette deuxième requête HTTP, le dispositif d'exécution « APPRUNTIME » accepte (24) d'établir la deuxième liaison de communication, reçoit les commandes transmises par le dispositif de restitution DMR via cette deuxième liaison et transmet ces commandes à l'application logicielle; ainsi lorsque l'utilisateur se sert de périphériques (clavier, souris, ...) sur le dispositif de restitution DMR pour interagir avec l'application logicielle en cours d'exécution dont le flux multimédia résultant est en cours de restitution (affichage de la vidéo, restitution sonore du contenu audio), le dispositif de restitution DMR notifie (25) le dispositif d'exécution « APPRUNTIME » via la deuxième liaison de communication en voyant des commandes représentatives des actions effectuées par l'utilisateur au moyen des périphériques du dispositif de restitution DMR; le dispositif d'exécution « APPRUNTIME » notifie à son tour l'application logicielle qui "réagit" en fonction des actions représentées par les commandes reçues: ceci implique des modifications sur le déroulement de l'application logicielle (sur le jeu en cours), et donc sur les images et/ou sons produits par cette application logicielle, entrainant par là même la modification du flux multimédia transmis via la première liaison de communication.

Ainsi l'application logicielle (le jeu) s'exécute ainsi dans l'environnement du dispositif d'exécution « APPRUNTIME » mais la restitution du flux multimédia résultant du jeu est assurée par le dispositif de restitution DMR.

L'invention permet ainsi une exécution d'une application logicielle sur un dispositif déporté (le dispositif d'exécution) par rapport au dispositif (de restitution) utilisé par l'utilisateur pour interagir avec cette application logicielle.

Les dispositifs UPnP sont utilisés pour la mise en œuvre de cette exécution déportée en respectant les mécanismes propres au standard UPnP: indexation par le serveur de contenu, obtention de métadonnées par le dispositif de contrôle, envoi de paramètres de restitution et d'une commande de restitution au dispositif de restitution, émission de requête HTTP par le dispositif de restitution pour obtenir le contenu à restituer.

Le scénario d'exécution d'une application logicielle indexée en tant que contenu a été décrit ci-dessus dans le cas d'utilisation d'un modèle UPnP à trois boîtes (DMC, DMR, DMS). Il est transposable sans difficulté au modèle UPnP à deux boîtes (DMP, DMS), dans lequel les fonctions du DMC et celles du DMR sont intégrées dans un seul et même dispositif UPnP. Dans ce modèle à deux boîtes, les échanges par invocation d'action entre le DMC et le DMR décrits pour le modèle à trois boîtes sont remplacés par de simples appels de fonction au sein du DMP.

### ANNEXE 1

### 1. Exemple de métadonnées d'une photo selon le protocole UPnP :

```
 <item id="2$73688166$805306398" parentID="2$73688166" restricted="1">
 <dc:title>Plage</dc:title>
 <upnp:album>Vacances</upnp:album>
 <dc:date>2009-07-16</dc:date>
 <upnp:class>object.item.imageItem.photo</upnp:class>
 <res        size="19623"      resolution="720x479"       protocolInfo="http-
 get:*:image/jpeg:DLNA.ORG_PN=JPEG_MED;DLNA.ORG_OP=01;DLNA.ORG_FLAGS=00f0
 0000000000000000000000000000">http://192.168.1.15:8055/DLNA-
 720x479/photo/plage.jpg</res>
 <res             resolution="48x32"        protocolInfo="http-
 get:*:image/jpeg:DLNA.ORG_PN=JPEG_TN;DLNA.ORG_OP=01;DLNA.ORG_CI=1;DLNA.O
 RG_FLAGS=00f00000000000000000000000000000">
 http://192.168.1.15:8055/dlna-48x32/photo/plage.jpg</res>
 </item>
```

### 2. Exemple de représentation objet d'une application logicielle correspondant par exemple à un jeu en langage flash utilisée selon le procédé de distribution de l'invention, utilisant notamment une nouvelle classe d'indexation dédiée aux applications logicielles intéractives, selon le protocole UPnP :

```
 <item id="2$73688166$805306398" parentID="2$73688166" restricted="1">
 <dc:title>Imaginarium</dc:title>
 <dc:date>2010-03-16</dc:date>
 <upnp:class>object.item.gameItem</upnp:class>
 <res        resolution="720x479"        protocolInfo="http-get:*:       application/x-shockwave-
 flash:DLNA.ORG_PN=FLASH>http://192.168.1.15:8055/DLNA-720x479/game/imaginarium.swf
 </res>
 <upnp:genre>adventure</upnp:genre>
 <specific:life_span>5</specific:life_span>
 <specific:required_peripherals>keyboard,joystick</specific:required_peripherals>
 <specific:optional_peripherals>wheel</specific:optional_peripherals>
 <specific:difficulty>easy</specific:difficulty>
 <specific:game_engine environment="windows" environnementVersion="XP,Vista,Seven"
 name="Flash" version="10">
 http://www.adobe.com/win/flash_player.zip
 </specific:game_engine>
 <specific:game_engine ...>http://...w</specific:game_engine>
 </item>
```

Les propriétés en gras sont les propriétés spécifiques à la phase d'indexation mise en œuvre dans le procédé de distribution d'une application logicielle de l'invention.

## Revendications

1. Procédé de contrôle d'une exécution (20) d'une application logicielle, **caractérisé en ce qu'**il est mis en œuvre au sein d'une architecture comprenant un serveur de contenus, DMS, au moins un dispositif de restitution, DMR, de contenus multimédia, et un dispositif de contrôle, DMC, conçu pour le pilotage dudit au moins dispositif de restitution de contenus multimédia, ledit procédé de contrôle étant mis en œuvre par ledit dispositif de contrôle et comprenant :
- une étape d'obtention auprès dudit serveur de contenus, de données d'indexation de ladite application logicielle indexée en tant que contenu multimédia au sein dudit serveur de contenus, lesdites données d'indexation comprenant une première adresse de localisation de contenu, à utiliser par un dispositif d'exécution, APPRUNTIME, pour obtenir un module logiciel conçu pour une exécution de ladite application logicielle,
- une étape de transmission, audit dispositif d'exécution, d'une instruction d'initialisation de ladite application logicielle comprenant la première adresse de localisation de contenu,
- une étape d'obtention, auprès dudit dispositif d'exécution, configuré pour déclencher une exécution de ladite application logicielle, de premières données de connexion à utiliser par un dispositif de restitution pour établir une première liaison de communication à travers un réseau avec le dispositif d'exécution et pour recevoir, pendant ladite exécution, via ladite première liaison de communication un flux multimédia résultant de ladite exécution,
- une étape de transmission audit dispositif de restitution de paramètres de restitution d'un contenu multimédia comprenant lesdites premières données de connexion,
- une étape d'envoi audit dispositif de restitution d'une commande de restitution dudit contenu multimédia, destinée à déclencher une restitution par ledit dispositif de restitution dudit flux multimédia.

2. Procédé de contrôle selon la revendication 1, dans lequel les premières données de connexion sont sous forme d'une deuxième adresse de localisation de contenu.

3. Procédé de contrôle selon la revendication 1, **caractérisé en ce qu'**il comprend en outre au sein dudit dispositif de contrôle :
- une étape de réception, en provenance dudit dispositif d'exécution, de deuxièmes données de connexion à utiliser par ledit dispositif de restitution pour établir une deuxième liaison de communication à travers un réseau avec le dispositif d'exécution et transmettre via ladite deuxième liaison de communication d'au moins une commande à exécuter par ladite application logicielle et représentative d'au moins une action effectuée par un utilisateur au moyen d'un périphérique du dispositif de restitution ;
- une étape de modification de données d'indexation de ladite application logicielle en y intégrant lesdites deuxièmes données de connexion ;
- une étape de transmission audit dispositif de restitution des données d'indexation modifiées.

4. Procédé de contrôle selon la revendication 1, **caractérisé en ce qu'**il comprend en outre une étape de mise en œuvre de moyens de sélection (22A, 22B), parmi une pluralité de dispositifs d'exécution, d'un dispositif d'exécution apte à exécuter ladite application logicielle, en fonction d'une configuration nécessaire à l'exécution de ladite application logicielle.

5. Procédé de contrôle selon la revendication 1, **caractérisé en ce que**, le dispositif de contrôle étant mis en œuvre sous forme de dispositif UPnP et le dispositif d'exécution, le dispositif d'exécution étant mis en œuvre au sein d'un dispositif UPnP sous forme de service d'exécution d'applications, le procédé comprend une étape de mise en œuvre d'un protocole de découverte dudit dispositif UPnP et dudit service d'exécution d'applications.

6. Dispositif de contrôle, DMC, conçu pour le pilotage d'au moins un dispositif de restitution, DMR, de contenus multimédia et comprenant :
- des moyens d'obtention, auprès d'un serveur de contenus, DMS, de données d'indexation d'une application logicielle indexée en tant que contenu multimédia au sein dudit serveur de contenus, lesdites données d'indexation comprenant une première adresse de localisation de contenu, à utiliser par un dispositif d'exécution, APPRUNTIME, pour obtenir un module logiciel conçu pour une exécution de ladite application logicielle,- des moyens de transmission, audit dispositif d'exécution, d'une instruction d'initialisation de ladite application logicielle comprenant la première adresse de localisation de contenu,
- des moyens d'obtention, auprès dudit dispositif d'exécution configuré pour déclencher une exécution d'une application logicielle, de premières données de connexion à utiliser par un dispositif de restitution pour établir une première liaison de communication à travers un réseau avec le dispositif d'exécution et pour recevoir, pendant ladite exécution, via ladite première liaison de communication, un flux multimédia résultant de ladite exécution,
- des moyens de transmission audit dispositif de restitution de paramètres de restitution d'un contenu multimédia comprenant lesdites premières données de connexion,
- des moyens d'envoi audit dispositif de restitution d'une commande de restitution dudit contenu multimédia, destinée à déclencher une restitution par ledit dispositif de restitution dudit flux multimédia.

7. Procédé d'exécution d'une application logicielle **caractérisé en ce qu'**il comprend, au sein d'un dispositif d'exécution, APPRUNTIME :
- une étape de réception, en provenance d'un dispositif de contrôle, DMC, conçu pour le pilotage d'au moins un dispositif de restitution, DMR, de contenus multimédia, d'une instruction d'initialisation de ladite application logicielle, comprenant une première adresse de localisation de contenu pour obtenir un module logiciel conçu pour une exécution de ladite application logicielle,
- une étape de déclenchement d'une exécution de ladite application logicielle par ledit module logiciel,
- une étape de transmission, audit dispositif de contrôle, de premières données de connexion à utiliser par un dispositif de restitution pour établir une première liaison de communication à travers un réseau avec le dispositif d'exécution et recevoir pendant ladite exécution un flux multimédia résultant de ladite exécution,
- une étape d'établissement de ladite première liaison de communication avec ledit dispositif de restitution ;
- une étape de transmission audit dispositif de restitution, via ladite première liaison de communication, dudit flux multimédia.

8. Procédé d'exécution d'une application logicielle selon la revendication 7, **caractérisé en ce que** ledit procédé comprend :
- une étape de transmission, audit dispositif de contrôle, de deuxièmes données de connexion utilisables pour établir une deuxième liaison de communication à travers un réseau avec le dispositif d'exécution,
- une étape d'établissement de ladite deuxième liaison de communication avec ledit dispositif de restitution;
- une étape de réception via ladite deuxième liaison d'au moins une commande à exécuter par ladite application logicielle et représentative d'au moins une action effectuée par un utilisateur au moyen d'un périphérique du dispositif de restitution;
- une étape de transmission de ladite commande à ladite application logicielle en cours d'exécution.

9. Procédé d'exécution d'une application logicielle selon la revendication 7, **caractérisé en ce que**, le dispositif de contrôle étant mis en œuvre sous forme de dispositif UPnP et le dispositif d'exécution, le dispositif d'exécution étant mis en œuvre au sein d'un dispositif UPnP sous forme de service d'exécution d'applications, le procédé comprend une étape de mise en œuvre d'un protocole de découverte dudit dispositif UPnP et dudit service d'exécution d'applications.

10. Procédé d'exécution d'une application logicielle selon la revendication 7, **caractérisé en ce qu'**il comprend, préalablement à ladite étape de déclenchement, une étape de création d'une session applicative au cours de laquelle ladite étape de déclenchement sera exécutée, lesdites premières données de connexion comprenant un identifiant de ladite session applicative et une adresse dudit dispositif d'exécution.

11. Dispositif d'exécution, APPRUNTIME, d'une application logicielle **caractérisé en ce qu'**il comprend:
- des moyens de réception, en provenance d'un dispositif de contrôle, DMC, conçu pour le pilotage d'au moins un dispositif de restitution, DMR, de contenus multimédia, d'une instruction d'initialisation de ladite application logicielle, comprenant une première adresse de localisation de contenu pour obtenir un module logiciel conçu pour une exécution de ladite application logicielle,
- des moyens de déclenchement d'une exécution de ladite application logicielle par ledit module logiciel,
- des moyens de transmission, audit dispositif de contrôle, de premières données de connexion à utiliser par un dispositif de restitution pour établir une première liaison de communication à travers un réseau avec le dispositif d'exécution et recevoir pendant ladite exécution un flux multimédia à restituer, résultant de ladite exécution,
- des moyens d'établissement de ladite première liaison de communication avec ledit dispositif de restitution;
- des moyens de transmission audit dispositif de restitution, via ladite première liaison de communication, dudit flux multimédia.

12. Dispositif de restitution, DMR, de contenus multimédia, apte à communiquer avec un dispositif d'exécution, APPRUNTIME, selon la revendication 11, configuré pour déclencher une exécution d'une application logicielle, **caractérisé en ce qu'**il comprend:
- des moyens d'obtention, en provenance d'un dispositif de contrôle, DMC, conçu pour le pilotage dudit dispositif de restitution de contenus multimédia, de paramètres de restitution d'un contenu multimédia, lesdits paramètres de restitution comprenant des premières données de connexion à utiliser pour établir une première liaison de communication à travers un réseau avec ledit dispositif d'exécution,
- des moyens d'établissement de ladite première liaison de communication avec le dispositif d'exécution et des moyens de réception, pendant ladite exécution, via ladite première liaison de communication, d'un flux multimédia résultant de ladite exécution,
- des moyens de réception d'une commande de restitution dudit contenu multimédia, déclenchant une restitution par ledit dispositif de restitution dudit flux multimédia,
- des moyens de restitution dudit flux multimédia.

13. Dispositif de restitution selon la revendication 12, **caractérisé en ce qu'**il comprend en outre :
- des moyens d'obtention de données d'indexation dudit contenu multimédia, lesdites données d'indexation comprenant des deuxièmes données de connexion à utiliser pour établir une deuxième liaison de communication à travers un réseau avec ledit dispositif d'exécution,
- des moyens d'établissement de ladite deuxième liaison de communication avec le dispositif d'exécution,
- des moyens de transmission via ladite deuxième liaison de communication d'au moins une commande à exécuter par ladite application logicielle et représentative d'au moins une action effectuée par un utilisateur au moyen d'un périphérique du dispositif de restitution.

## Patentansprüche

1. Verfahren zur Steuerung einer Ausführung (20) einer Softwareanwendung, **dadurch gekennzeichnet, dass** es innerhalb einer Architektur durchgeführt wird, die einen Inhalteserver, DMS, mindestens eine Multimediainhalte-Wiedergabevorrichtung, DMR, und eine Steuerungsvorrichtung, DMC, die für die Steuerung der mindestens eine Multimediainhalte-Wiedergabevorrichtung ausgelegt ist, umfasst, wobei das Steuerungsverfahren von der Steuerungsvorrichtung durchgeführt wird und Folgendes umfasst:
- einen Schritt des Beziehens, bei dem Inhalteserver, von Indexierungsdaten der Softwareanwendung, die als Multimediainhalt innerhalb des Inhalteservers indexiert ist, die Indexierungsdaten umfassend eine erste Inhaltslokalisierungsadresse, die von einer Ausführungsvorrichtung, APPRUNTIME, zu nutzen ist, um ein Softwaremodul zu beziehen, das für eine Ausführung der Softwareanwendung ausgelegt ist,
- einen Schritt des Übertragens, an die Ausführungsvorrichtung, einer Initialisierungsanweisung der Softwareanwendung umfassend die erste Inhaltslokalisierungsadresse,
- einen Schritt des Beziehens, bei der Ausführungsvorrichtung, die dazu ausgebildet ist, eine Ausführung der Softwareanwendung auszulösen, von ersten Verbindungsdaten, die von einer Wiedergabevorrichtung zu nutzen sind, um eine erste Kommunikationsverbindung über ein Netzwerk mit der Ausführungsvorrichtung herzustellen, und um während der Ausführung über die erste Kommunikationsverbindung einen Multimediastrom zu empfangen, der aus der Ausführung hervorgeht,
- einen Schritt des Übertragens, an die Wiedergabevorrichtung, von Wiedergabeparametern eines Multimediainhalts umfassend die ersten Verbindungsdaten,
- einen Schritt des Sendens, an die Wiedergabevorrichtung, eines Befehls zur Wiedergabe des Multimediainhalts, der dazu bestimmt ist, eine Wiedergabe des Multimediastroms durch die Wiedergabevorrichtung auszulösen.

2. Steuerungsverfahren nach Anspruch 1, wobei die ersten Verbindungsdaten in Form einer zweiten Inhaltslokalisierungsadresse vorliegen.

3. Steuerungsverfahren nach Anspruch 1, **dadurch gekennzeichnet, dass** es ferner innerhalb der Steuerungsvorrichtung Folgendes umfasst:
- einen Schritt des Empfangens, von der Ausführungsvorrichtung, von zweiten Verbindungsdaten, die von der Wiedergabevorrichtung zu nutzen sind, um eine zweite Kommunikationsverbindung über ein Netzwerk mit der Ausführungsvorrichtung herzustellen und über die zweite Kommunikationsverbindung mindestens einen Befehl zu übertragen, der durch die Softwareanwendung auszuführen ist und für mindestens eine Aktion repräsentativ ist, die durch einen Benutzer mittels eines Peripheriegeräts der Wiedergabevorrichtung durchgeführt wird;
- einen Schritt des Veränderns von Indexierungsdaten der Softwareanwendung, indem die zweiten Verbindungsdaten in diese integriert werden;
- einen Schritt des Übertragens der veränderten Indexierungsdaten an die Wiedergabevorrichtung.

4. Steuerungsverfahren nach Anspruch 1, **dadurch gekennzeichnet, dass** es ferner einen Schritt des Verwendens von Mitteln zur Auswahl (22A, 22B) einer Ausführungsvorrichtung aus einer Mehrzahl von Ausführungsvorrichtungen umfasst, die geeignet ist, die Softwareanwendung in Abhängigkeit von einer Konfiguration, die zur Ausführung der Softwareanwendung notwendig ist, auszuführen.

5. Steuerungsverfahren nach Anspruch 1, **dadurch gekennzeichnet, dass**, wenn die Steuerungsvorrichtung in Form einer UPnP-Vorrichtung und der Ausführungsvorrichtung realisiert ist, wenn die Ausführungsvorrichtung innerhalb der UPnP-Vorrichtung in Form eines Anwendungsausführungsdienstes realisiert ist, das Verfahren einen Schritt des Verwendens eines Entdeckungsprotokolls der UPnP-Vorrichtung und des Anwendungsausführungsdienstes umfasst.

6. Steuerungsvorrichtung, DMC, die für die Steuerung mindestens einer Multimediainhalte-Wiedergabevorrichtung, DMR, ausgelegt ist und Folgendes umfasst:
- Mittel zum Beziehen, bei einem Inhalteserver, DMS, von Indexierungsdaten einer Softwareanwendung, die als Multimediainhalt innerhalb des Inhalteservers indexiert ist, die Indexierungsdaten umfassend eine erste Inhaltslokalisierungsadresse, die von einer Ausführungsvorrichtung, APPRUNTIME, zu nutzen ist, um ein Softwaremodul zu beziehen, das für eine Ausführung der Softwareanwendung ausgelegt ist,- Mittel zum Übertragen, an die Ausführungsvorrichtung, einer Initialisierungsanweisung der Softwareanwendung umfassend die erste Inhaltslokalisierungsadresse,
- Mittel zum Beziehen, bei der Ausführungsvorrichtung, die dazu ausgebildet ist, eine Ausführung einer Softwareanwendung auszulösen, von ersten Verbindungsdaten, die von einer Wiedergabevorrichtung zu nutzen sind, um eine erste Kommunikationsverbindung über ein Netzwerk mit der Ausführungsvorrichtung herzustellen, und um während der Ausführung über die erste Kommunikationsverbindung einen Multimediastrom zu empfangen, der aus der Ausführung hervorgeht,
- Mittel zum Übertragen, an die Wiedergabevorrichtung, von Wiedergabeparametern eines Multimediainhalts umfassend die ersten Verbindungsdaten,
- Mittel zum Senden, an die Wiedergabevorrichtung, eines Befehls zur Wiedergabe des Multimediainhalts, der dazu bestimmt ist, eine Wiedergabe des Multimediastroms durch die Wiedergabevorrichtung auszulösen.

7. Verfahren zur Ausführung einer Softwareanwendung, **dadurch gekennzeichnet, dass** es innerhalb einer Ausführungsvorrichtung, APPRUNTIME, Folgendes umfasst:
- einen Schritt des Empfangens, von einer Steuerungsvorrichtung, DMC, die zur Steuerung mindestens einer Multimediainhalte-Wiedergabevorrichtung, DMR, ausgelegt ist, einer Initialisierungsanweisung der Softwareanwendung, umfassend eine erste Inhaltslokalisierungsadresse, um ein Softwaremodul zu beziehen, das für eine Ausführung der Softwareanwendung ausgelegt ist,
- einen Schritt des Auslösens einer Ausführung der Softwareanwendung durch das Softwaremodul,
- einen Schritt des Übertragens, an die Steuerungsvorrichtung, von ersten Verbindungsdaten, die von einer Wiedergabevorrichtung zu nutzen sind, um eine erste Kommunikationsverbindung über ein Netzwerk mit der Ausführungsvorrichtung herzustellen und während der Ausführung einen Multimediastrom zu empfangen, der aus der Ausführung hervorgeht,
- einen Schritt des Herstellens der ersten Kommunikationsverbindung mit der Wiedergabevorrichtung;
- einen Schritt des Übertragens des Multimediastroms an die Wiedergabevorrichtung über die erste Kommunikationsverbindung.

8. Verfahren zur Ausführung einer Softwareanwendung nach Anspruch 7, **dadurch gekennzeichnet, dass** das Verfahren Folgendes umfasst:
- einen Schritt des Übertragens, an die Steuerungsvorrichtung, von zweiten Verbindungsdaten, die nutzbar sind, um eine zweite Kommunikationsverbindung über ein Netzwerk mit der Ausführungsvorrichtung herzustellen,
- einen Schritt des Herstellens der zweiten Kommunikationsverbindung mit der Wiedergabevorrichtung;
- einen Schritt des Empfangens, über die zweite Verbindung, mindestens eines Befehls, der durch die Softwareanwendung auszuführen ist und für mindestens eine Aktion repräsentativ ist, die durch einen Benutzer mittels eines Peripheriegeräts der Wiedergabevorrichtung durchgeführt wird;
- einen Schritt des Übertragens des Befehls an die Softwareanwendung während der Ausführung.

9. Verfahren zur Ausführung einer Softwareanwendung nach Anspruch 7, **dadurch gekennzeichnet, dass**, wenn die Steuerungsvorrichtung in Form einer UPnP-Vorrichtung und der Ausführungsvorrichtung realisiert ist, wenn die Ausführungsvorrichtung innerhalb der UPnP-Vorrichtung in Form eines Anwendungsausführungsdienstes realisiert ist, das Verfahren einen Schritt des Verwendens eines Entdeckungsprotokolls der UPnP-Vorrichtung und des Anwendungsausführungsdienstes umfasst.

10. Verfahren zur Ausführung einer Softwareanwendung nach Anspruch 7, **dadurch gekennzeichnet, dass** es vor dem Schritt des Auslösens einen Schritt des Erstellens einer Anwendungs-Session umfasst, während welcher der Schritt des Auslösens ausgeführt wird, die ersten Verbindungsdaten umfassend eine Kennung der Anwendungs-Session und eine Adresse der Ausführungsvorrichtung.

11. Vorrichtung zur Ausführung, APPRUNTIME, einer Softwareanwendung, **dadurch gekennzeichnet, dass** sie Folgendes umfasst:
- Mittel zum Empfangen, von einer Steuerungsvorrichtung, DMC, die zur Steuerung mindestens einer Multimediainhalte-Wiedergabevorrichtung, DMR, ausgelegt ist, einer Initialisierungsanweisung der Softwareanwendung, umfassend eine erste Inhaltslokalisierungsadresse, um ein Softwaremodul zu beziehen, das für eine Ausführung der Softwareanwendung ausgelegt ist,
- Mittel zum Auslösen einer Ausführung der Softwareanwendung durch das Softwaremodul,
- Mittel zum Übertragen, an die Steuerungsvorrichtung, von ersten Verbindungsdaten, die von einer Wiedergabevorrichtung zu nutzen sind, um eine erste Kommunikationsverbindung über ein Netzwerk mit der Ausführungsvorrichtung herzustellen und während der Ausführung einen wiederzugebenden Multimediastrom zu empfangen, der aus der Ausführung hervorgeht,
- Mittel zum Herstellen der ersten Kommunikationsverbindung mit der Wiedergabevorrichtung;
- Mittel zum Übertragen des Multimediastroms an die Wiedergabevorrichtung über die erste Kommunikationsverbindung.

12. Multimediainhalte-Wiedergabevorrichtung, DMR, die geeignet ist, mit einer Ausführungsvorrichtung, APPRUNTIME, nach Anspruch 11 zu kommunizieren, die dazu ausgebildet ist, eine Ausführung einer Softwareanwendung auszulösen, **dadurch gekennzeichnet, dass** sie Folgendes umfasst:
- Mittel zum Beziehen, von einer Steuerungsvorrichtung, DMC, die für die Steuerung der Multimediainhalte-Wiedergabevorrichtung ausgelegt ist, von Wiedergabeparametern eines Multimediainhalts, die Wiedergabeparameter umfassend erste Verbindungsdaten, die zu nutzen sind, um eine erste Kommunikationsverbindung über ein Netzwerk mit der Ausführungsvorrichtung herzustellen,
- Mittel zum Herstellen der ersten Kommunikationsverbindung mit der Ausführungsvorrichtung und Mittel zum Empfangen, während der Ausführung über die erste Kommunikationsverbindung, eines Multimediastroms, der aus der Ausführung hervorgeht,
- Mittel zum Empfangen eines Befehls zur Wiedergabe des Multimediainhalts, der eine Wiedergabe des Multimediastroms durch die Wiedergabevorrichtung auslöst,
- Mittel zur Wiedergabe des Multimediastroms.

13. Wiedergabevorrichtung nach Anspruch 12, **dadurch gekennzeichnet, dass** sie ferner Folgendes umfasst:
- Mittel zum Beziehen von Indexierungsdaten des Multimediainhalts, die Indexierungsdaten umfassend zweite Verbindungsdaten, die zu nutzen sind, um eine zweite Kommunikationsverbindung über ein Netzwerk mit der Ausführungsvorrichtung herzustellen,
- Mittel zum Herstellen der zweiten Kommunikationsverbindung mit der Ausführungsvorrichtung,
- Mittel zum Übertragen, über die zweite Kommunikationsverbindung, mindestens eines Befehls, der durch die Softwareanwendung auszuführen ist und für mindestens eine Aktion repräsentativ ist, die durch einen Benutzer mittels eines Peripheriegeräts der Wiedergabevorrichtung durchgeführt wird.

## Claims

1. Method for controlling an execution (20) of a software application, **characterized in that** it is carried out within an architecture comprising a content server, DMS, at least one device, DMR, for rendering multimedia content, and a control device, DMC, that is designed to drive said at least one device for rendering multimedia content, said control method being carried out by said control device and comprising:
- a step of obtaining, from said content server, indexing data for said software application indexed as multimedia content within said content server, said indexing data comprising a first content location address, to be used by an execution device, APPRUNTIME, to obtain a software module that is designed to execute said software application,
- a step of transmitting, to said execution device, an instruction for initializing said software application comprising the first content location address,
- a step of obtaining, from said execution device, which is configured to trigger an execution of said software application, first connection data to be used by a rendering device to establish a first communication link through a network with the execution device and to receive, during said execution, via said first communication link, a multimedia stream resulting from said execution,
- a step of transmitting, to said rendering device, parameters for rendering a multimedia content comprising said first connection data,
- a step of sending, to said rendering device, a command to render said multimedia content, which is intended to trigger a rendering of said multimedia stream by said rendering device.

2. Control method according to Claim 1, wherein the first connection data take the form of a second content location address.

3. Control method according to Claim 1, **characterized in that** it further comprises, within said control device:
- a step of receiving, from said execution device, second connection data to be used by said rendering device to establish a second communication link through a network with the execution device and to transmit, via said second communication link, at least one command to be executed by said software application that is representative of at least one action performed by a user by means of a peripheral of the rendering device;
- a step of modifying indexing data for said software application by integrating said second connection data therewith;
- a step of transmitting, to said rendering device, the modified indexing data.

4. Control method according to Claim 1, **characterized in that** it further comprises a step of implementing means (22A, 22B) for selecting, from a plurality of execution devices, an execution device that is capable of executing said software application, according to a configuration required to execute said software application.

5. Control method according to Claim 1, **characterized in that**, the control device being implemented in the form of a UPnP device and the execution device, the execution device being implemented within a UPnP device in the form of an application execution service, the method comprises a step of implementing a discovery protocol of said UPnP device and of said application execution service.

6. Control device, DMC, designed to drive at least one device, DMR, for rendering multimedia content and comprising:
- means for obtaining, from a content server, DMS, indexing data for a software application indexed as multimedia content within said content server, said indexing data comprising a first content location address, to be used by an execution device, APPRUNTIME, to obtain a software module that is designed to execute said software application,
- means for transmitting, to said execution device, an instruction for initializing said software application comprising the first content location address,
- means for obtaining, from said execution device, which is configured to trigger an execution of a software application, first connection data to be used by a rendering device to establish a first communication link through a network with the execution device and to receive, during said execution, via said first communication link, a multimedia stream resulting from said execution,
- means for transmitting, to said rendering device, parameters for rendering a multimedia content comprising said first connection data,
- means for sending, to said rendering device, a command to render said multimedia content, which is intended to trigger a rendering of said multimedia stream by said rendering device.

7. Method for executing a software application, **characterized in that** it comprises, within an execution device, APPRUNTIME:
- a step of receiving, from a control device, DMC, which is designed to drive at least one device, DMR, for rendering multimedia content, an instruction for initializing said software application, comprising a first content location address for obtaining a software module that is designed to execute said software application,
- a step of triggering an execution of said software application by said software module,
- a step of transmitting, to said control device, first connection data to be used by a rendering device to establish a first communication link through a network with the execution device and to receive, during said execution, a multimedia stream resulting from said execution,
- a step of establishing said first communication link with said rendering device;
- a step of transmitting, to said rendering device, said multimedia stream via said first communication link.

8. Method for executing a software application according to Claim 7, **characterized in that** said method comprises:
- a step of transmitting, to said control device, second connection data that can be used to establish a second communication link through a network with the execution device,
- a step of establishing said second communication link with said rendering device;
- a step of receiving, via said second link, at least one command to be executed by said software application that is representative of at least one action performed by a user by means of a peripheral of the rendering device;
- a step of transmitting said command to said software application that is being executed.

9. Method for executing a software application according to Claim 7, **characterized in that**, the control device being implemented in the form of a UPnP device and the execution device, the execution device being implemented within a UPnP device in the form of an application execution service, the method comprises a step of implementing a discovery protocol of said UPnP device and of said application execution service.

10. Method for executing a software application according to Claim 7, **characterized in that** it comprises, prior to said triggering step, a step of creating an application session during which said triggering step will be carried out, said first connection data comprising an identifier of said application session and an address of said execution device.

11. Device, APPRUNTIME, for executing a software application, **characterized in that** it comprises:
- means for receiving, from a control device, DMC, which is designed to drive at least one device, DMR, for rendering multimedia content, an instruction for initializing said software application, comprising a first content location address for obtaining a software module that is designed to execute said software application,
- means for triggering an execution of said software application by said software module,
- means for transmitting, to said control device, first connection data to be used by a rendering device to establish a first communication link through a network with the execution device and to receive, during said execution, a multimedia stream to be rendered, resulting from said execution,
- means for establishing said first communication link with said rendering device;
- means for transmitting, to said rendering device, said multimedia stream via said first communication link.

12. Device, DMR, for rendering multimedia content, capable of communicating with an execution device, APPRUNTIME, according to Claim 11, configured to trigger an execution of a software application, **characterized in that** it comprises:
- means for obtaining, from a control device, DMC, which is configured to drive said device for rendering multimedia content, parameters for rendering a multimedia content, said rendering parameters comprising first connection data to be used to establish a first communication link through a network with said execution device,
- means for establishing said first communication link with the execution device and means for receiving, during said execution, via said first communication link, a multimedia stream resulting from said execution,
- means for receiving a command to render said multimedia content, triggering a rendering of said multimedia stream by said rendering device,
- means for rendering said multimedia stream.

13. Rendering device according to Claim 12, **characterized in that** it further comprises:
- means for obtaining indexing data for said multimedia content, said indexing data comprising second connection data to be used to establish a second communication link through a network with said execution device,
- means for establishing said second communication link with the execution device,
- means for transmitting, via said second communication link, at least one command to be executed by said software application that is representative of at least one action performed by a user by means of a peripheral of the rendering device.
